# EUROPÄISCHE PATENTSCHRIFT

(11) **EP 3 289 470 B1**
(45) Veröffentlichungstag und Bekanntmachung des Hinweises auf die Patenterteilung: **05.08.2020**
(21) Anmeldenummer: 16720345.4
(22) Anmeldetag: 28.04.2016
(51) Int. Cl.: G06F 13/40, G07D 7/20

(54) **WERTDOKUMENTBEARBEITUNGSVORRICHTUNG MIT EINEM DATENKOMMUNIKATIONSSYSTEM UND VERFAHREN ZUR VERTEILUNG VON SENSORDATEN IN EINER WERTDOKUMENTBEARBEITUNGSVORRICHTUNG**
VALUE DOCUMENT HANDLING APPARATUS HAVING A DATA COMMUNICATION SYSTEM AND METHOD FOR DISTRIBUTING SENSOR DATA IN A VALUE DOCUMENT HANDLING APPARATUS
DISPOSITIF DE TRAITEMENT DE DOCUMENTS DE VALEUR COMPRENANT UN SYSTÈME DE COMMUNICATION DE DONNÉES ET PROCÉDÉ DE DISTRIBUTION DE DONNÉES DE CAPTEUR DANS UN DISPOSITIF DE TRAITEMENT DE DOCUMENTS DE VALEUR

(30) Priorität: 28.04.2015 DE 102015005450; 09.03.2016 DE 102016002897
(43) Veröffentlichungstag der Anmeldung: 07.03.2018
(73) Patentinhaber: Giesecke+Devrient Currency Technology GmbH, 81677 München (DE)
(72) Erfinder: RÖHRL, Wolfgang, 85521 Riemerling (DE); TRUMPFHELLER, Holger, 81245 München (DE)
(86) Internationale Anmeldenummer: PCT/EP2016/000689
(87) Internationale Veröffentlichungsnummer: WO 2016/173714

(56) Entgegenhaltungen:
- EP-A1- 2 482 256
- DE-A1-102012 024 397
- DE-A1-102012 025 084
- US-A1- 2002 173 874

## Beschreibung

Die Erfindung betrifft ein System zur Verteilung von Sensordaten in einer Wertdokumentbearbeitungsvorrichtung sowie ein Verfahren zur Verteilung von Sensordaten in einer Wertdokumentbearbeitungsvorrichtung.

Wertdokumentbearbeitungsvorrichtungen sind insbesondere zur Bearbeitung von Banknoten bekannt. Dabei werden Wertdokumente hinsichtlich der Währung, des Werts, der Echtheit, der Qualität und/ oder der Orientierung klassifiziert. Unter der Orientierung eines Wertdokuments wird im Folgenden bei einem rechteckigen Wertdokument eine der vier möglichen Lagen verstanden, die durch Drehungen des Wertdokuments um seine Längs- und Querachse um jeweils 180° erhalten werden kann. Unter der Qualität eines Wertdokuments wird insbesondere dessen Zustand verstanden; der Zustand kann bei Banknoten beispielsweise durch Zuordnung zu Klassen wie "umlauffähig" und/oder "nicht umlauffähig" und/oder "beschädigt" oder "beschädigt" in Verbindung mit der Art der Beschädigung gegeben sein. In Abhängigkeit von der Klassifizierung können die Wertdokumente dann beispielsweise sortiert und gegebenenfalls in entsprechenden Ausgabebereichen abgelegt werden. Dies sei am Beispiel von Wertdokumenten in Form von Banknoten erläutert.

Die Klassifizierung erfolgt aufgrund verschiedener physikalischer Eigenschaften der individuellen, d. h. jeweils bearbeiteten, Banknote. Beispiele für solche physikalischen Eigenschaften sind optische Eigenschaften, beispielsweise Farbeigenschaften, magnetische Eigenschaften oder Ultraschalleigenschaften.

Unter Wertdokumenten werden im Rahmen der vorliegenden Patentanmeldung blattförmige Gegenstände verstanden, die beispielsweise einen monetären Wert repräsentieren und daher nicht beliebig durch Unbefugte herstellbar sein sollen. Sie weisen daher nicht einfach herzustellende, insbesondere zu kopierende Merkmale auf, deren Vorhandsein ein Indiz für die Echtheit, d.h. die Herstellung durch eine dazu befugte Stelle, ist. Wichtige Beispiele für solche Wertdokumente sind Gutscheine, Schecks und insbesondere Banknoten.

Bei der Erfassung der verschiedenen physikalischen Eigenschaften der individuellen, d. h. jeweils zu bearbeitenden bzw. bearbeiteten, Banknote werden bei der Bearbeitung von Banknoten in Banknotenbearbeitungsvorrichtungen mittels Sensoren Sensordaten erzeugt, die für die Klassifizierung verwendet werden. Die Sensordaten umfassen von den Sensoren ermittelte Messwerte, insbesondere eine physikalische Eigenschaft wenigstens eines Abschnitts der Banknote. Die Sensordaten können bereits einem Bearbeitungsvorgang im Sensor, beispielsweise Korrekturen in Bezug auf Kalibrierung und/oder Beseitigung von Rausch- oder Hintergrundanteilen, unterzogen sein. Die vom Sensor erstellten Sensordaten können als analoges oder digitales Signal ausgegeben werden.

Die von den Sensoren gelieferten Sensordaten werden üblicherweise in einer mit dem Sensor verbundenen Auswerteeinrichtung, die auch wenigstens teilweise zur Steuerung der Wertdokumentbearbeitungsvorrichtung ausgebildet sein kann, ausgewertet. Bei der Auswertung werden Banknotenmerkmale, die den Banknotentyp, die Echtheit und die Qualität der Banknote charakterisieren, durch geeignete Auswerteverfahren bestimmt. In Abhängigkeit von den bestimmten Banknotenmerkmalen wird dann von der Auswerteeinrichtung ein Klassifizierungsergebnis berechnet, das als Folge bestimmt, in welchem Ausgabefach der Banknotenbearbeitungsvorrichtung die Banknote abgelegt werden soll. Vorzugsweise steuert die Auswerteeinrichtung in Abhängigkeit von dem Klassifizierungsergebnis eine Transporteinrichtung der Banknotenbearbeitungsvorrichtung an.

Die Auswerteverfahren und die Ermittlung des Klassifizierungsergebnisses müssen an den Typ der zu verarbeitenden Banknoten und auch an die Anforderungen der Betreiber von Banknotenbearbeitungsvorrichtungen angepasst werden. Dazu ist die Auswerteeinrichtung, vorzugsweise wenigstens ein darin ablaufendes Auswerteprogramm, parametrierbar, d. h. es sind Klassifizierungsparameter vorhanden, deren Werte vorgebbar sind und die bei der Auswertung und Klassifizierung bzw. der Ermittlung des Klassifizierungsergebnisses verwendet werden; diese Anpassung der Klassifizierungsparameterwerte, auch oftmals als Anpassung der Klassifizierungsparameter bezeichnet, wird im Folgenden als Adaption bezeichnet.

Bei der Prüfung von Banknoten werden unterschiedliche Merkmale einer großen Anzahl an Banknoten geprüft. Viele dieser Merkmale bewirken ein großes Datenvolumen. Darüber hinaus werden die bei der Prüfung erfassten Sensordaten zur unterschiedlichen Auswertung an eine oder eine Vielzahl an Verarbeitungseinheiten bzw. Auswertevorrichtungen gesendet. Zwischen den Sensoren und den Verarbeitungseinheiten findet somit ein hoher Datentransfer statt.

Die US 2002/173874 A1 offenbart ein Verfahren zur Verteilung von Daten. Daten eines Sensors werden digitalisiert und an einen Router versandt. Der Router sendet die Sensordaten an eine Verarbeitungseinheit über eine Datenschnittstelle.

Für das Prüfen von Banknoten werden Sensoren eingesetzt, die zunehmend eine höhere Auflösung aufweisen. Dies führt zunehmend zu einer großen Datenmenge, welche von dem Sensor an eine Verarbeitungseinheit transferiert werden muss. Weiterhin nehmen die Anforderungen zur Verarbeitungsgeschwindigkeit zu, so dass die Anzahl zu prüfender und/ oder zu sortierender Banknoten pro Sekunde steigt. Zudem hält der Trend einer steigender Anzahl und Komplexität von Sicherheitsmerkmalen an, was zu immer aufwändigeren Algorithmen zur Prüfung von Banknoten führt.

Es ist deshalb eine Aufgabe der Erfindung, ein Verfahren zur Verteilung eines Datenstroms in einer Wertdokumentbearbeitungsvorrichtung bereitzustellen, womit die Nachteile des Standes der Technik behoben werden. Insbesondere ist es Aufgabe der Erfindung, ein Verfahren und eine Vorrichtung zur Weiterleitung eines Datenstroms bereitzustellen, womit ein hoher Durchsatz an zu prüfenden Wertdokumenten und somit ein hoher Durchsatz an Daten ermöglicht wird.

Diese Aufgaben werden durch die Gegenstände der unabhängigen Ansprüche gelöst. Besonders vorteilhafte Ausgestaltungen ergeben sich aus den Unteransprüchen.

Ein Verfahren gemäß der Erfindung betrifft eine Verteilung eines Datenstroms in einer Wertdokumentbearbeitungsvorrichtung von wenigstens einem Sensor zu wenigstens einer Verarbeitungseinheit. Die Wertdokumentbearbeitungsvorrichtung umfasst eine Verteileinheit und wenigstens eine Verarbeitungseinheit. Die Verteileinrichtung weist wenigstens zwei Datenschnittstellen auf. Das Verfahren umfasst die Schritte:
- Erstellen eines Sensordatenpakets. Das Sensordatenpaket umfasst Sensordaten und eine Zieladresse. Die Zieladresse beschreibt eine physikalische Speicheradresse einer der Verarbeitungseinheiten.
- Senden des Sensordatenpakets an eine der Datenschnittstellen der Verteileinrichtung.
- Empfangen des Sensordatenpakets an einer der Datenschnittstellen der Verteileinrichtung.
- Weiterleiten des Sensordatenpakets durch die Verteileinrichtung an die wenigstens eine Verarbeitungseinheit. Die Verteileinrichtung ermittelt dazu aus der Zieladresse des Sensordatenpakets Weiterleitungsparameter. In Abhängigkeit der Weiterleitungsparameter und der Zieladresse bestimmt die Verteileinrichtung eine weitere Datenschnittstelle zur Ausgabe des Sensordatenpakets an eine der wenigstens eine Verarbeitungseinheit, zu der das Sensordatenpaket bestimmt ist. Die weitere Datenschnittstelle ist der einen Verarbeitungseinheit zugeordnet.
- Empfangen des Sensordatenpakets durch jeweilige Verarbeitungseinheit.
- Ablegen des Sensordatenpakets und somit der Sensordaten in der durch die Zieladresse beschriebene physikalische Speicheradresse der wenigstens einen Verarbeitungseinheit.

Der Datenstrom kann Sensordaten, ein Sensordatenpaket oder sonstige Informationen umfassen. Im Rahmen der Erfindung wird zur Vereinfachung in der Regel lediglich der Begriff Sensordatenpaket verwendet.

In einer Ausführungsform kann vorgesehen sein, dass die Sensordatenpakete entsprechend dem PCIe-Standard oder dem Rapid-IO-Standard transportiert werden.

Ein System gemäß der Erfindung zum Verteilen von Sensordaten in einer Wertdokumentbearbeitungsvorrichtung umfasst wenigstens eine Verteileinheit und wenigstens eine Verarbeitungseinheit. Die wenigstens eine Verteileinheit weist wenigstens zwei Datenschnittstellen auf, wobei eine zum Empfang eines Sensordatenpakets ausgebildet ist und die eine weitere Datenschnittstelle mit einer der wenigstens einen Verarbeitungseinheit verbunden ist. Die Verarbeitungseinheit weist eine Recheneinheit und einen Speicher auf. Der Speicher weist eine physikalische Speicheradresse auf.

Die Verteileinheit ist ausgebildet, das Sensordatenpaket zu empfangen und aus dem Sensordatenpaket in Abhängigkeit von einer im Sensordatenpaket enthaltenen Zieladresse Weiterleitungsparameter zu ermitteln. Die Zieladresse beschreibt eine physikalische Speicheradresse der Verarbeitungseinheit. Die Verarbeitungseinheit ist mit der weiteren Datenschnittstelle, die durch die Weiterleitungsparameter der Zieladresse des Sensordatenpakets zugewiesen ist, an der das Sensordatenpaket ausgegeben wird, verbunden. Die Verteileinrichtung sendet über die jeweilige Datenschnittstelle das Sensordatenpaket an die jeweilige Verarbeitungseinheit.

Mit der vorliegenden Erfindung ist es möglich, Sensordaten durch ein Sensordatenpaket an eine der wenigstens einen Verarbeitungseinheiten zu versenden und direkt in den Speicher der wenigstens einen Verarbeitungseinheit zu schreiben, ohne dass aufwändige Kopiervorgänge und/ oder Adressumwandlungen mithilfe einer Recheneinheit und/ oder Rechenleistung durch die Recheneinheit notwendig ist. Darüber hinaus können die Sensordaten einer oder mehreren Verarbeitungseinheiten gleichzeitig bereitgestellt werden, ohne dass ein Sensor ein Vielfaches der Sensordaten über eine Kommunikationsverbindung bereitstellen muss.

Aufgrund der Zieladresse wird die Datenschnittstelle der Verteileinrichtung zur Ausgabe bzw. Weiterleitung des Sensordatenpakets bestimmt. Eine flexible Anpassung der Verteilung der Sensordaten bzw. des Datenstroms in der Wertdokumentbearbeitungsvorrichtung ist durch Festlegung der Zieladresse und/ oder Weiterleitungsparameter möglich. Insbesondere können verschiedene Sensoren sowie die Auslastung einer Verarbeitungseinheit berücksichtigt werden, so dass ein hoher Grad an Auslastung aller Komponenten des Systems (die gegebenenfalls vorhandene wenigstens eine Koppeleinheit, die wenigstens eine Verarbeitungseinheit und die Verteileinrichtung) erzielt werden kann.

Das erfindungsgemäße Verfahren kann auf bisherigen Systemen von Wertdokumentbearbeitungsvorrichtungen angewandt werden, insoweit die bisherigen Sensoren mit dem neuen Verfahren weiter verwendet werden können.

Im Rahmen der Erfindung wird als Verarbeitungseinheit eine Vorrichtung verstanden, die zur Verarbeitung von Sensordaten geeignet ist. Die Verarbeitung von Sensordaten kann ein Auswerten oder Teilauswerten der Sensordaten, einen Vergleich mit wenigstens einem Referenzwert und/ oder das Umwandeln bzw. Konvertieren sowie Filtern von Werten aus den Sensordaten umfassen. Die Verarbeitungseinheit weist vorzugsweise eine Recheneinheit, beispielsweise einen Prozessor oder CPU, und einen Speicher, auf den die Recheneinheit zugreifen kann und in den die Sensordaten geschrieben werden.

Das System kann wenigstens eine Koppeleinheit umfassen. In einer vorteilhaften Ausgestaltung wird das Sensordatenpaket durch eine Koppeleinheit erstellt. Die Koppeleinheit empfängt dabei die Sensordaten beispielsweise direkt von einem Sensor über eine geeignete Sensorschnittstelle. Als besonders geeignete Sensorschnittstelle sind Schnittstellen gemäß dem Camera Link (CL) Standard, dem High-Level Data Link Control (HDLC) Standard und/ oder der Common Detector Interface- (CDI) Spezifikation zu erwähnen. Vorzugsweise werden die Sensordaten von der Koppeleinheit gemäß eines vorgegebenen Protokolls formatiert, welches zur Übermittlung des Sensordatenpakets an die Verarbeitungseinheit verwendet wird, so dass das Sensordatenpaket in einem geeigneten Format vorliegt. Die Koppeleinheit bestimmt zudem die Zieladresse für das Sensordatenpaket. Die Zieladresse liegt vorzugsweise der Koppeleinheit vor. In einer Ausgestaltung kann die Zieladresse der Koppeleinheit fest vorgegeben werden. In einer alternativen Ausgestaltung kann die Zieladresse durch eine Steuereinheit bei Beginn bzw. Start des Systems fest und während des Betriebs der Wertdokumentbearbeitungsvorrichtung variabel, z. B. für jede Banknote individuell, vorgegeben werden. In einer alternativen Ausgestaltung kann die Koppeleinheit die Zieladresse durch eine Auswahl und/ oder Algorithmus bestimmen, beispielsweise hinsichtlich der Menge der Sensordaten, deren Qualität und/ oder der Art des entsprechenden Sensors, beispielsweise Magnetsensor, Bildsensor und/ oder Ultraschallsensor. Die Koppeleinheit dient somit als Kommunikationsglied zwischen beispielsweise Sensor und Verteileinrichtung.

Die Koppeleinheit ist vorzugsweise mit einer Recheneinheit, beispielsweise einem Prozessor und/ oder einem FPGA (Field Programmable Gate Array; programmierbarer integrierter Schaltkreis; im Feld programmierbare Logik-Gatter-Anordnung) ausgebildet. Die Koppeleinheit ist vorzugsweise für das Erstellen des Sensordatenpakets verantwortlich. Die Koppeleinheit führt dazu vorzugsweise eine sensor-spezifische Transformation der Sensordaten aus, beispielsweise eine so genannte Flat-Field-Korrektur und/ oder nimmt eine Anpassung des Übertragungsprotokolls vor. Beispielsweise können Sensoren während einer Adaption der Wertdokumentbearbeitungsvorrichtung, deren Wartung und/oder Reparatur ausgetauscht oder ersetzt werden. Vorzugsweise weist die Koppeleinheit eine PCIe-Schnittstelle auf, über die die Koppeleinheit mit der Verteileinrichtung in Kommunikation steht und das Sensordatenpaket an die Verteileinrichtung gesendet wird. Die Kommunikationsverbindung zwischen der wenigstens einen Koppeleinheit und der Verteileinrichtung ist dabei als PCIe-Verbindung, beispielsweise in 4-Lane-Ausführung ausgebildet.

Die wenigstens eine Koppeleinheit kann in einer Ausgestaltung als Rechnerkarte (Board) oder in einem Sensor integriert bereitgestellt sein. Vorzugsweise weist die wenigstens eine Koppeleinheit zwei Schnittstellen auf, wobei eine Schnittstelle zur Verbindung mit dem Sensor und die zweite Schnittstelle zur Verbindung mit der Verteileinrichtung ausgebildet sind. In einer besonderen Ausgestaltung weist die Koppeleinheit eine dritte Schnittstelle zu einem weiteren Sensor auf. Die Koppeleinheit kann ausgebildet sein, die Sensordaten der wenigstens zwei Sensoren zu vermischen und an wenigstens eine Verarbeitungseinheit über die Verteileinrichtung unter Verwendung einer Zieladresse zu versenden. Alternativ kann die Koppeleinheit ausgebildet sein, die Sensordaten von jedem der wenigstens zwei Sensoren jeweils als Sensordatenpaket an wenigstens eine Verarbeitungseinheit über die Verteileinrichtung unter Verwendung einer Zieladresse zu senden.

In einer Ausgestaltung kann eine der wenigstens einen Koppeleinheit aus den empfangenen Sensordaten wenigstens zwei Sensordatenpakete erstellen. Beispielsweise können die Sensordatenpakete entsprechend einer maximalen Speichergröße zum Versenden und/ oder zum Empfangen, insbesondere Ablegen, durch die wenigstens eine durch die Zieladresse bestimmte Verarbeitungseinheit, aufgeteilt sein.

Die Steuereinheit umfasst vorzugsweise eine Recheneinheit, beispielsweise einen Prozessor und besonders bevorzugt einen Speicher. Die Steuereinheit ist vorzugsweise ausgebildet, die von der wenigstens einen Verarbeitungseinheit gewonnenen Verarbeitungsergebnisse auszuwerten und als Auswertungsergebnis an eine Maschinensteuerung auszugeben. Das Auswertungsergebnis kann zur Ansteuerung einer Sortiereinrichtung verwendet werden. Die Übertragung des Auswertungsergebnisses erfolgt bevorzugt mittels einer Maschinenschnittstelle, beispielsweise über einen CAN-Bus und/ oder Ethernet. Bevorzugt ist die Steuereinheit in Kombination mit wenigstens einer Verarbeitungseinheit bereitgestellt. Insbesondere kann dabei die wenigstens eine Verarbeitungseinheit die Funktion der Steuereinheit übernehmen. In einer bevorzugten Ausgestaltung umfasst die Steuereinheit einen Root-Complex, insbesondere für ein Datenkommunikationsnetzwerk zwischen der gegebenenfalls wenigstens einen vorhandenen Koppeleinheit, der wenigstens einen Verarbeitungseinheit und der Verteileinrichtung.

In einer bevorzugten Ausgestaltung ist in der Verteileinrichtung eine Weiterleitungstabelle hinterlegt. Die Weiterleitungstabelle weist zu Zieladressen Weiterleitungsparameter sowie Informationen zur Auswahl einer geeigneten Datenschnittstelle zur Ausgabe des Sensordatenpakets auf. Die Weiterleitungstabelle kann beispielsweise in der Verteileinrichtung gespeichert sein. Alternativ kann die Weiterleitungstabelle in einem zur Verteileinrichtung externen Speicher, beispielsweise auf einer Speicherkarte und/ oder auf einem Server, vorliegen. Die Weiterleitungstabelle kann klassisch in tabellarischer Form vorliegen. Weiterhin kann statt der Weiterleitungstabelle ein Algorithmus zur Bestimmung Datenschnittstelle aus einer Zieladresse unter Verwenden von Weiterleitungsparametern vorliegen.

In einer Ausgestaltung kann das System wenigstens zwei Verarbeitungseinheiten umfassen. Dazu ist vorgesehen, dass die Verteileinrichtung das empfangene Sensordatenpaket an wenigstens zwei Datenschnittstellen weitergibt (Mehrfachverteilungs-Funktionalität). Dabei vervielfältigt die Verteileinrichtung vorzugsweise das Sensordatenpaket entsprechend. Die Zieladresse des Sensordatenpakets entspricht dabei vorzugsweise einer physikalischen Speicheradresse, welche alle Verarbeitungseinheiten, die das Sensordatenpaket empfangen sollen, aufweisen. D.h., alle Verarbeitungseinheiten, die das Sensordatenpaket empfangen sollen, erwarten die Sensordaten an derselben physikalischen Speicheradresse.

Entsprechend den Komponenten des Systems ist an der Verteileinrichtung ein (Ziel-) Adressraum festgelegt. D.h., der Ziel-Adressraum spiegelt vorzugsweise die physikalischen Speicheradressen der mit der Verteileinrichtung verbundenen Komponenten des Systems. In einer Ausführungsform ist jeder Zieladresse wenigstens eine Datenschnittstelle der Verteileinrichtung zugeordnet.

Aufgrund der Mehrfachverteilungs-Funktionalität ist ein hoher Parallelisierungsgrad bei der Verarbeitung von Sensordaten möglich. Insbesondere eine Verarbeitung von rechenintensiven Sensordaten und/ oder bei einer Verarbeitung von gleichen Sensordaten zu verschiedenen Zwecken ist durch diese Funktionalität verbessert. Darüber hinaus wird die Verteilung von Sensordaten verschlankt, da weder alle Verarbeitungseinheiten alle Sensordaten erhalten und benötigte Sensordaten filtern müssen, als auch ein mehrfaches Versenden durch den Sensor vermieden wird.

In einer vorteilhaften Ausgestaltung ist eine Verarbeitungseinheit zum Senden von Verarbeitungsergebnissen (oder Teilergebnissen) an die Verteileinrichtung ausgebildet. Die Verarbeitungsergebnisse werden vorzugsweise ähnlich dem Sensordatenpaket als Verarbeitungsergebnispaket versendet. Die Zieladresse des Verarbeitungsergebnispakets kann beispielsweise eine weitere Verarbeitungseinheit und/ oder die Steuereinheit betreffen. Die Verteileinrichtung ermittelt analog zum Sensordatenpaket aus der Zieladresse eine Datenschnittstelle zur Weiterleitung.

In einer Ausgestaltung ist die Steuereinheit ausgebildet, den Sensor, eine der wenigstens einen Koppeleinheit, die Verteileinrichtung und/ oder eine der wenigstens einen Verarbeitungseinheit (Komponenten des Systems) zu konfigurieren. Insbesondere konfiguriert die Steuereinheit die Komponenten des Systems bei einem Systemstart und gibt Einstellungen, wie beispielsweise initial eine Zieladresse an die wenigstens einen Koppeleinheit zum Versand des Sensordatenpakets. Besonders bevorzugt stellt die Steuereinheit der Verteileinrichtung die Weiterleitungsparameter und/ oder, soweit vorhanden, die Weiterleitungstabelle bereit.

In einer bevorzugten Ausgestaltung konfiguriert die Steuereinheit den Zieladressbereich zum Versenden von Daten, insbesondere Sensordaten, von der Koppeleinheit und/ oder der Verarbeitungseinheit. Die Konfiguration kann sowohl beim Systemstart als auch dynamisch vorgenommen werden, so dass die Steuereinheit während des Betriebs die Zieladressen, an welche Datenpakete versendet werden, vorgibt.

Vorzugsweise weist die Steuereinheit eine Schnittstelle zu Sensoren, insbesondere eine CDI-Schnittstelle, eine Schnittstelle zu einem CAN-Bus und/ oder eine Schnittstelle zu einem Taktgeber, auf. Beispielsweise kann der Taktgeber eine Wertdokument-Ankündigung bzw. eine Wertdokumentnummer bezüglich einer Reihenfolge anzeigen und/ oder eine Zeitinformation, beispielsweise eine Zeittaktung, bereitstellen. Weiterhin kann die Steuereinheit ausgebildet sein, eine Auswertung von Ergebnissen wenigstens einer Verarbeitungseinheit durchzuführen und ggf. Signale zur Steuerung von Teilen der Wertdokumentbearbeitungsvorrichtung zu versenden, beispielsweise zur Steuerung einer Sortiereinrichtung der Wertdokumentbearbeitungsvorrichtung.

In einer bevorzugten Ausgestaltung werden Sensordaten eines Wertdokuments gemäß einer Reihenfolge, insbesondere zu jedem N-ten Wertdokument, der Koppeleinheit und/ oder der Verarbeitungseinheit zum Versenden eines Datenpakets eine bestimmte Zieladresse übergeben (verschränkte Auswertung).

Bei einer verschränkten Bearbeitung mit einem Verschränkungsfaktor V werden Verarbeitungseinheiten in V gleich große Gruppen aufgeteilt; die erste Gruppe der Verarbeitungseinheiten erhält die Daten der Wertdokumente N, N+V, N+2^{∗}V... Die zweite Gruppe erhält die Daten der Wertdokumente N+1, N+V+1, N+2^{∗}V+1... Die letzte Gruppe erhält die Daten der Wertdokumente N+V-1, N+2^{∗}V-1, N+3^{∗}V-1... Die verschränkte Bearbeitung basiert auf den Umstand, dass die Verarbeitung eines Wertdokuments völlig unabhängig von der Auswertung anderer Wertdokumente erfolgen kann. Daher erfordert dieses Verfahren auch keine besondere Kommunikation zwischen den Gruppen.

Die verschränkte Bearbeitung von Daten hat den Vorteil, dass man auf einfache Weise eine Parallelisierung erhält, ohne die Auswerte-Algorithmen für jede Banknote explizit parallelisieren zu müssen und sie bringt einen zusätzlichen Effizienzgewinn, wenn in die Verarbeitungseinheiten weniger Sensordaten eingespielt werden, da damit die Schnittstelle zum Speicher deutlich entlastet werden kann.

In einer vorteilhaften Ausgestaltung weist wie bereits erläutert das System eine Steuereinheit auf. Die Steuereinheit dient insbesondere zur Konfiguration der Komponenten des Systems, besonders bevorzugt zum Einstellen von Zieladressen zum Versand von Datenpakete. Die Steuereinheit kann als separate Einheit bzw. Komponente im System bereitgestellt werden. Alternativ kann die Steuereinheit Teil der Verarbeitungseinheit und/ oder einer weiteren Verarbeitungseinheit sein.

In einer Ausführungsform ist das Sensordatenpaket gemäß dem PCIe-Standard oder Rapid-IO-Standard ausgebildet. Die wenigstens zwei Datenschnittstellen der Verteileinrichtung, sowie die Schnittstellen zur Kommunikation zwischen der gegebenenfalls vorhandenen wenigstens einen Koppeleinheit und/ oder der wenigstens einen Verarbeitungseinheit sind entsprechend als PCIe-Schnittstellen oder Rapid-IO-Schnittstellen ausgebildet. Entsprechend ist die Verteileinrichtung als PCIe-Switch oder Rapid-IO-Switch ausgebildet. Entsprechend sind die Komponenten des Systems über einen PCIe- oder Rapid-IO- Kabel verbunden.

Grundsätzlich können die Komponenten des Systems über ein zweites Kommunikationssystem, beispielsweise mittels Ethernet, zum Austausch von Informationen bzw. Daten verbunden sein. Darüber hinaus können die Komponenten des Systems Schnittstellen zu beispielsweise Benutzerschnittstellen, z. B. zur Ein- und Ausgabe, einem Speicher und/ oder zu taktbezogenen Diensten, z.B. Maschinentakt, aufweisen.

Die wenigstens eine Koppeleinheit, wenigstens eine Verarbeitungseinheit und/ oder die Verteileinrichtung sind vorzugsweise als Rechnerkarten bereitgestellt. Die Rechnerkarten können an einem Baugruppenträger (Rack) angeschlossen sein.

Das System ist vorzugsweise ausgebildet, dass die Komponenten des Systems über eine Punkt-zu-Punkt-Verbindung miteinander verbunden sind und kommunizieren. Insbesondere sind vorzugsweise jede der gegebenenfalls wenigstens einen vorhandenen Koppeleinheit über eine Punkt-zu-Punkt-Verbindung mit der Verteileinrichtung und die Verteileinrichtung über eine Punkt-zu-Punkt-Verbindung zu jeder der wenigstens einen Verarbeitungseinheit verbunden.

In einer Ausgestaltung kann das System ausgebildet sein, dass das Sensordatenpaket gemäß dem PCIe-Standard oder Rapid-IO-Standard transportiert werden, wozu die Verteileinrichtung als PCIe-Switch bzw. Rapid-IO-Switch ausgebildet ist und die Koppeleinrichtung und die Verarbeitungseinrichtung entsprechende PCIe- bzw. Rapid-IO-Schnittstellen aufweisen

Die Erfindung wird im Folgenden noch weiter beispielhaft an Hand der Zeichnungen erläutert. Es zeigen:
- Fig. 1: eine schematische Ansicht einer Wertdokumentbearbeitungsvorrichtung,
- Fig. 2: eine schematische Ansicht eines Ausführungsbeispiels eines Systems zur Verteilung von Datenpakete gemäß der Erfindung;
- Fig. 3a, b: eine schematische Darstellung eines Ausführungsbeispiels zum Betrieb eines Systems zur Verteilung von Datenpaketen;
- Fig.4: eine schematische Darstellung eines Ausführungsbeispiels zur Verteilung von Sensordaten;
- Fig. 5: beispielhaft und schematisch einen Adressbereich; und
- Fig.6: eine schematische Darstellung zur Mehrfachverteilungs-Funktionalität.

Zur Vereinfachung und schnellerem Verständnis sind gleiche Bauteile und Bauteile mit gleicher oder ähnlicher Funktion, soweit sinnvoll, mit gleichem Bezugszeichen gekennzeichnet.

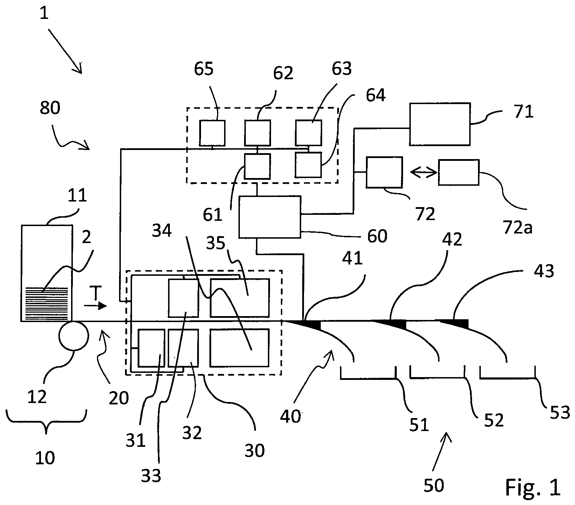

In Fig. 1 ist schematisch eine Wertdokumentbearbeitungsvorrichtung 1 zur Bearbeitung von beispielsweise Banknoten 2 dargestellt. Die Wertdokumentbearbeitungsvorrichtung 1 ist zur Sortierung von Banknoten 2 in Abhängigkeit der Klassifikation von Banknoten 2 ausgebildet. Zur Klassifikation werden beispielsweise die Echtheit, der Zustand und/ oder die Wertigkeit eingegebener Banknoten 2 untersucht. Die im Folgenden beschriebenen Komponenten des Systems der Vorrichtung sind vorzugsweise in einem nicht gezeigten Gehäuse der Vorrichtung angeordnet oder an diesem gehalten, soweit sie nicht als extern bezeichnet sind. Der Aufbau der beschriebenen Wertdokumentbearbeitungsvorrichtung 1 ist nur beispielhaft.

Die Vorrichtung verfügt über eine Transporteinrichtung 20, mit der die Banknoten 2 von einer Zuführeinrichtung 10 zu einer Ausgabeeinrichtung 50 transportiert werden. Die Banknoten 2 werden entlang eines Transportpfads in Transportrichtung T bewegt. Die Zuführeinrichtung 10 weist ein Eingabefach 11 zur Aufnahme von zu sortierenden Banknoten 2 auf. Ein Vereinzeler 12 vereinzelt die im Eingabefach 11 eingebrachten Banknoten 2. Der Vereinzeler entnimmt dem Eingabefach 11 gleichzeitig nur eine Banknote 2, sodass gleichzeitig nur eine Banknote vom Eingabefach 11 der Transporteinrichtung 20 übergeben wird.

Vom Vereinzeler 12 führt die Transporteinrichtung 20 die vereinzelten Banknoten 2 einer Sensoreinrichtung 30 zu. Die Sensoreinrichtung 30 weist in diesem Ausführungsbeispiel mehrere Sensoren 31, 32, 33, 34, 35 auf, vorliegend einen optischen Transmissionssensor 31, beispielsweise in der Ausprägung und Anordnung als Hellfeldtransmissionssensor und/ oder Dunkelfeldtransmissionssensor, einen Magnetsensor 32, einen Ultraschallsensor 33 und zwei Bildsensoren 34, 35. Der optische Transmissionssensor 31 erfasst ein Transmissionsfarbbild und ein Transmissions-IR-Bild (IR: Infrarot) der Banknote 2. Die Bildsensoren 34, 35 sind zum Erfassen eines Remissionsfarbbilds und eines Remissions-IR-Bilds (IR: Infrarot) der Banknote 2 ausgebildet. Die Bildsensoren 34, 35 erzeugen eine bildgebende Wiedergabe der flächigen Oberflächen der Banknote 2, nämlich deren Vorder- und der Rückseite. Der Ultraschallsensor 33 erfasst ortsaufgelöst Ultraschalltransmissionseigenschaften der Banknote 2. Grundsätzlich können die genannten Sensoren 31 bis 35 wie dargestellt gemeinsam, separat oder in einer Kombination daraus in einer Wertdokumentbearbeitungsvorrichtung 1 werden.

Die von den Sensoren 31, 32, 33, 34, 35 erfassten Messdaten (Sensordaten) entsprechen im Wesentlichen Messdaten bzw. Rohdaten. In besonderen Fällen kann der Sensor bereinigte Messdaten bereitstellen, beispielsweise unter Berücksichtigung von Kalibrierdaten und/oder Rauscheigenschaften.

Die Sensoren 31, 32, 33, 34, 35 sind jeweils über eine Koppeleinheit (nicht dargestellt) bzw. einem Datenkommunikationsnetzwerk 80 mit fünf Verarbeitungseinheiten 61, 62, 63, 64, 65 verbunden. Die Verarbeitungseinheiten 61, 62, 63, 64, 65 verarbeiten die von den Sensoren 31, 32, 33, 34, 35 erfassen Messdaten und geben die verarbeiteten Messdaten an eine Maschinensteuervorrichtung 60. Die Maschinensteuervorrichtung 60 ist vorliegend als Recheneinheit ausgebildet und umfasst einen Prozessor und einen Speicher. Die verarbeiteten Messdaten von den Verarbeitungseinheiten 61, 62, 63, 64, 65 werden der Recheneinheit übergeben und zur Weiterverarbeitung abgelegt. Weiterhin kann der Speicher als zur Maschinensteuervorrichtung 60 externer Speicher für die verarbeiteten Messdaten, beispielsweise in einem Server, ausgebildet sein.

Die Maschinensteuervorrichtung 60 ist vorliegend zur Interaktion mit einem Benutzer durch eine Benutzerschnittstelle 72 verbunden. Die Benutzerschnittstelle 72 kann eine Anzeigeeinrichtung 72a und/ oder eine Tastatur sein, vorzugsweise ein Touch-Panel (Kombination von Anzeige und Bedienfeld) oder damit verbunden sein. Weiterhin ist die Maschinensteuervorrichtung 60 mit einem externen Datenverarbeitungsgerät 71, beispielsweise ein Server, verbunden.

Die Wertdokumentbearbeitungsvorrichtung 1 ist vorliegend dazu ausgebildet, in zwei Betriebsarten bzw. Betriebsmodi betrieben zu werden, einer Sortierbetriebsart zum Sortieren von Wertdokumenten 2 in Abhängigkeit von deren Zustand bzw. Qualität und deren Echtheit und einer Messdatenerfassungsbetriebsart zum Erfassen von Messdaten für vorgegebene Wertdokumente 2. Insbesondere sind die Sensoren 31-35 hierfür entsprechend ausgebildet. Die Verarbeitungseinheiten 61-65 werten beispielsweise von den Sensoren 31, 32, 33, 34, 35 empfangene Messwerte bzw. Sensordaten aus. Durch die Auswertung werden beispielsweise die Währung, die Nomination (Wertigkeit), der Fitheitsgrad (Zustand) und/ oder die wahrscheinliche Echtheit der vereinzelten Banknote 2 bestimmt. Anstatt der genannten zwei Betriebsarten wäre auch nur eine Betriebsart denkbar.

In der Sortierbetriebsart werden Wertdokumente 2 von der Zuführeinrichtung 10 vereinzelt und an der Sensoreinrichtung 30 vorbei bzw. durch diese hindurch transportiert. Die Sensoreinrichtung 30 erfasst bzw. misst physikalische Eigenschaften des jeweils an ihr vorbei bzw. durch sie hindurch transportierten Wertdokuments 2 und bildet Sensordaten, welche die Messwerte für die physikalischen Eigenschaften des entsprechenden Wertdokuments 2 beschreiben. Die Auswerteeinrichtung 60 klassifiziert in Abhängigkeit von den ausgewerteten Messwerten für ein Wertdokument 2 und von in der Auswerteeinrichtung 60 gespeicherten Klassifizierungsparametern das Wertdokument 2 in eine von vorgegebenen Echtheitsklassen. Vorzugsweise steuert die Auswerteeinrichtung 60 durch Abgabe von Stellsignalen die Transporteinrichtung 20, hier genauer eine Sortiereinrichtung 40 so an, dass das Wertdokument 2 entsprechend seiner bei der Klassifizierung ermittelten Klasse in einen der Klasse zugeordneten Ausgabefach 51, 52, 53 der Ausgabeeinrichtung 50 ausgegeben wird. Die Zuordnung zu einer der vorgegebenen Echtheitsklassen bzw. die Klassifizierung erfolgt in Abhängigkeit von wenigstens einem vorgegebenen Echtheitskriterium und/ oder Nominationskriterium.

In der Messdatenerfassungsbetriebsart werden Wertdokumente 2 aus der Zuführeinrichtung 10 vereinzelt und der Sensoreinrichtung 30 zugeführt bzw. durch diese hindurch transportiert. Die Sensoreinrichtung 30 erfasst bzw. misst physikalische Eigenschaften des jeweils ihr zugeführten bzw. durch sie hindurch transportierten Wertdokuments 2. Die Sensoreinrichtung 30 bildet Sensordaten, die Messwerte für die physikalischen Eigenschaften beschreiben bzw. umfassen. Die Auswerteeinrichtung 60 erfasst die Sensordaten und speichert wenigstens zeitweise entsprechende Sensordaten, insbesondere Messdaten sowie Informationen zur Auswertung der Sensordaten. Nach dem Erfassen werden die Wertdokumente in der Ausgabeeinrichtung 50, beispielsweise in dem ersten Ausgabefach 51 gestapelt.

Das Sortieren der Banknote 2 an ein Ausgabefach 51, 52, 53 erfolgt vorliegend durch die Auswerteeinrichtung 60. Die Auswerteeinrichtung 60 spricht entsprechend dem Auswerteergebnis der Sensordaten eine erste Abzweigung 41, eine zweite Abzweigung 42 oder eine dritte Abzweigung 43 der Sortiereinrichtung 40 an. Die Abzweigungen 41, 42, 43 sind in Transportrichtung T nach der Sensoreinrichtung 30 an der Transporteinrichtung 20 angeordnet und ausgebildet dass sie in den Transportpfad eingreifen und die vereinzelte Banknote 2 dem ersten bzw. zweiten bzw. dritten Ausgabefach 51, 52, 53 zuführen.

Anstelle der voran beschriebenen unterschiedlichen Betriebsarten kann eine Ausführungsform einer Banknotenbearbeitungsvorrichtung auch lediglich eine Auswahl an Betriebsarten aufweisen. Weiterhin kann vorgesehen sein, dass keine eindeutige Separierung der Betriebsarten sondern eine zusammengeführte Betriebsart, beispielsweise eine Kombination aus Sortierbetriebsart und Messdatenerfassungsbetriebsart vorliegt.

Im Folgenden werden besondere Aspekte der Datenverarbeitung, insbesondere in der Verteilung von Sensordaten, in der Wertdokumentbearbeitungsvorrichtung beschrieben.

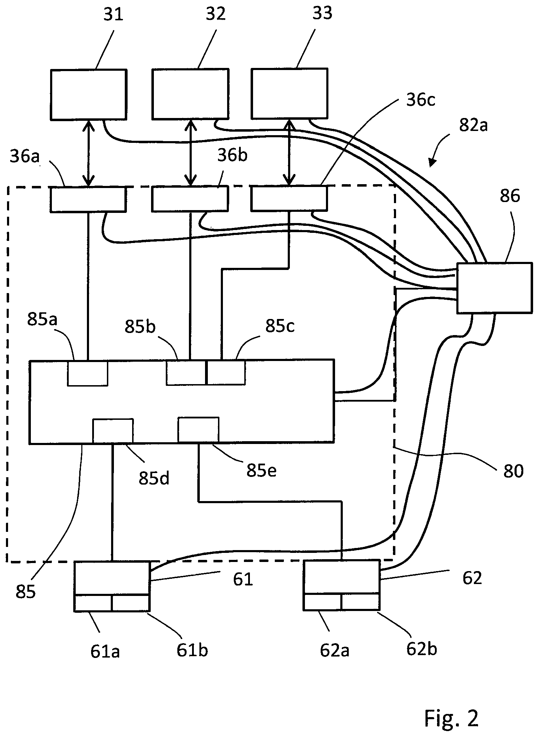

In der Figur 2 ist durch Funktionsbaugruppen bzw. Funktionsbauteilen schematisch ein Ausführungsbeispiel eines Systems zur Verteilung von Sensordaten dargestellt.

Das System umfasst in diesem Ausführungsbeispiel drei Sensoren 31, 32, 33, drei Koppeleinheiten 36a, 36b, 36c, eine Verteilungseinheit 85 sowie zwei Verarbeitungseinheiten 61, 62. Die drei Sensoren 31, 32, 33 sind jeweils durch die Koppeleinheiten 36a, 36b, 36c mit der Verteileinheit 85 verbunden. Sensordaten der Sensoren 31, 32, 33 werden zu den Koppeleinheiten 36a, 36b, 36c gesendet. Die Koppeleinheiten 36a, 36b, 36c bilden aus den Sensordaten Sensordatenpakete und senden diese an die Verteileinrichtung 85. Die Verteileinrichtung leitet die Sensordatenpakete entsprechend ihrer Bestimmung, nämlich aus einer in den Sensordatenpaketen eingetragene Zieladresse, an die entsprechende Verarbeitungseinheit zur Verarbeitung der Sensordaten weiter.

Nachfolgend wird das Ausführungsbeispiel der Figur 2 im Detail erläutert. Zur Erstellung von Sensordaten werden jeweils von beispielsweise einen optischen Transmissionssensor 31, Magnetsensor 32 und Ultraschallsensor 33 Messwerte erfasst. Diese Messwerte der Sensoren 31, 32, 33 werden jeweils über eine Kommunikationsverbindung zu der Koppeleinheit 36a, 36b, 36c gesendet. Die Sensoren 31, 32, 33 sind über eine physikalischen Verbindung, beispielsweise über eine Schnittstelle gemäß dem Camera Link (CL) Standard, dem High-Level Data Link Control (HDLC) Standard und/ oder der Common Detector Interface- (CDI) Spezifikation mit einer der Koppeleinheiten 36a, 36b, 36c verbunden.

Die Koppeleinheiten 36a, 36b, 36c erstellen aus den Sensordaten, welche Messwerte umfassen, Sensordatenpakete. Vorzugsweise bestimmt die entsprechende Koppeleinheit 36a, 36b, 36c zu den Sensordatenpaketen eine Zieladresse. Die Zieladresse beschreibt eine physikalische Speicheradresse in einem Speicher der Verarbeitungseinheit 61, 62, welche zur Verarbeitung der Sensordaten bestimmt ist. Weiterhin entsprechend die Sensordatenpakete einem vorgegebenen Übertragungsprotokoll, im Ausführungsbeispiel PCIe.

Jede der Koppeleinheiten 36a, 36b, 36c ist über eine Datenverbindung eines Datenkommunikationsnetzwerks 80 mit einer Datenschnittstelle 85a, 85b, 85c der Verteileinrichtung 85 verbunden und sendet ihre Sensordatenpakete an die Verteileinrichtung 85. Die Verteileinrichtung 85 empfängt an einer Datenschnittstelle 85a die Sensordatenpakete der Koppeleinheit 36a, an einer Datenschnittstelle 85b die Sensordatenpakete der Koppeleinheit 36b und an einer Datenschnittstelle 85c die Sensordatenpakete der Koppeleinheit 36c. Der Datenaustausch erfolgt nach PCIe-Standard.

In der Verteileinrichtung 85 sind Weiterleitungsparameter gespeichert. Die Weiterleitungsparameter legen eine Zuordnung, welche Zieladresse eines Sensordatenpakets welcher Datenschnittstelle 85a, 85b, 85c, 85d, 85e und damit der daran angeschlossenen Verarbeitungseinrichtung 61, 62 und/ oder Koppeleinheit 36a, 36b, 36c zugeordnet ist. Im vorliegenden Ausführungsbeispiel weist die Koppeleinheit 36a dem entsprechenden Sensordatenpaket eine Zieladresse aaa zu. In der Verteileinrichtung 85 ist hinterlegt, dass der Zieladresse aaa die Datenschnittstelle 85d zugeordnet ist. Die Verteileinrichtung 85 leitet demnach das Sensordatenpaket der Koppeleinheit 36a mit der Zieladresse aaa an die Datenschnittstelle 85d weiter. Weiterhin ordnet die Koppeleinheit 36b dem entsprechenden Sensordatenpaket eine Zieladresse bbb zu. Die Verteileinrichtung 85 empfängt an der Datenschnittstelle 85b das Sensordatenpaket der Koppeleinheit 36b. Die Verteileinrichtung 85 liest die Zieladresse des an der Datenschnittstelle 85b empfangenen Sensordatenpakets und ermittelt Parameter zur Weiterleitung des Sensordatenpakets an eine der Datenschnittstellen 85a, 85b, 85c, 85d, 85e der Verteileinrichtung. Gemäß der Zieladresse bbb wählt die Verteileinrichtung 85 zur Ausgabe des entsprechenden Sensordatenpakets die Datenschnittstelle 85e aus.

Das Sensordatenpaket mit der Zieladresse aaa, welches an der Datenschnittstelle 85d ausgegeben wird, wird somit an die Verarbeitungseinheit 61 gesendet. Das Sensordatenpaket mit der Zieladresse bbb, welches an der Datenschnittstelle 85e ausgegeben wird, wird an die Verarbeitungseinheit 62 gesendet. Die Zieladresse der Sensordatenpakete betreffen physikalische Speicheradressen der Verarbeitungseinheiten 61, 62. Somit wird das Sensordatenpaket mit der Zieladresse aaa von der Datenschnittstelle 85d direkt in die Speicheradresse aaa des Speichers 61a der Verarbeitungseinheit 61 geschrieben. Das Sensordatenpaket mit der Zieladresse bbb von der Datenschnittstelle 85e wird direkt in die Speicheradresse bbb des Speichers 62a der Verarbeitungseinheit 62 geschrieben. Die Verarbeitungseinheiten 61, 62 weisen zum Empfang von Sensordatenpakete jeweils eine Schnittstelle, vorliegend eine PCIe-Schnittstelle, auf.

Das Datenkommunikationsnetzwerk 80 ist als Kommunikationssystem zwischen Koppeleinheit 36a, 36b, 36c und Verarbeitungseinheit 61, 62 ausgebildet und dient zur Übertragung von Sensordatenpakete. Das Datenkommunikationsnetzwerk 80 weist mehrere Zieladressen auf. Die Zieladressen beschreiben eine physikalische Speicheradresse eines Bereichs in einem Speicher 61a, 62a wenigstens einer der Verarbeitungseinheiten 61, 62. Grundsätzlich ist denkbar, dass mehrere Verarbeitungseinheiten 61, 62 eine gleich benannte Zieladresse aufweisen, d.h. eine definierte Zieladresse im lokalen Bussystem beschreibt eine physikalische Speicheradresse von mehreren Verarbeitungseinheiten 61, 62. Wenigstens ein Prozessor 61b, 62b der Verarbeitungseinheiten 61, 62 greift zur Verarbeitung der Sensordaten aus dem Sensordatenpaket auf die entsprechende physikalische Speicheradresse zu.

Die Koppeleinheit 36c erstellt aus den Messwerten des Sensors 33 ein Sensordatenpaket mit der zugewiesenen Zieladresse ccc. Beide Verarbeitungseinheiten 61, 62 weisen in ihren Speichern eine Speicheradresse ccc auf. Dass beide Verarbeitungseinheiten 61, 62 und somit ein Gerät des Datenkommunikationsnetzwerks 80 eine Speicheradresse ccc aufweisen, wobei die Verarbeitungseinheiten 61, 62 an den Datenschnittstellen 85d bzw. 85e angeschlossen sind, ist der Verteileinrichtung 85 bekannt. Bei Empfang des Sensordatenpakets mit der Zieladresse ccc leitet die Verteileinrichtung 85 dieses Sensordatenpaket an die Datenschnittstellen 85d, 85e weiter, so dass das Sensordatenpaket in die Speicheradresse ccc beider Verarbeitungseinheiten 61, 62 abgelegt wird.

Zur Konfiguration der Komponenten, insbesondere der Koppeleinheiten 36a, 36b, 36c, der Verteileinrichtung 85 und der Verarbeitungseinheiten 61, 62 ist eine Steuereinheit 86 (auch manchmal Konfigurationseinheit genannt) vorgesehen. Die Steuereinheit 86 erkennt bei einem Systemstart der Wertdokumentbearbeitungsvorrichtung die am das Datenkommunikationsnetzwerk 80 angeschlossenen Komponenten. Dabei wird der Verteileinrichtung 85, soweit notwendig bzw. noch nicht vorhanden, Weiterleitungsparameter in Abhängigkeit von der Zieladresse eines Sensordatenpakets und/ oder anderer Datenpakete übermittelt. Nach einer Erstkonfiguration steuert die Steuereinheit 86 die Koppeleinheiten 36a, 36b, 36c zur Verteilung von Sensordatenpaketen. Dabei kann die Steuereinheit 86 dynamisch jeder Koppeleinheit 36a, 36b, 36c für das nächste zu sendende Sensordatenpaket entsprechend einer (bestimmten) Banknote eine bestimmte Zieladresse vorgeben. Dabei kann die Steuereinheit 86 der Koppeleinheit 36a, 36b, 36c direkt eine Zieladresse vorgeben oder eine Korrelation zwischen einer getriggerten, insbesondere nummerierten, Taktung und der Zieladresse vorgeben. Die Steuereinrichtung kann über das Datenkommunikationsnetzwerk 80 und/ oder über ein anderes Datenkommunikationssystem mit den Komponenten des Systems verbunden sein.

Aus der Figur 2 ist ersichtlich, dass jede Koppeleinheit 36a, 36b, 36c über eine Punkt-zu-Punkt-Verbindung mit der Verteileinrichtung 85 verbunden ist. Weiterhin ist jeder der Verarbeitungseinheiten 61, 62 über eine Punkt-zu-Punkt-Verbindung mit der Verteileinrichtung 85 verbunden.

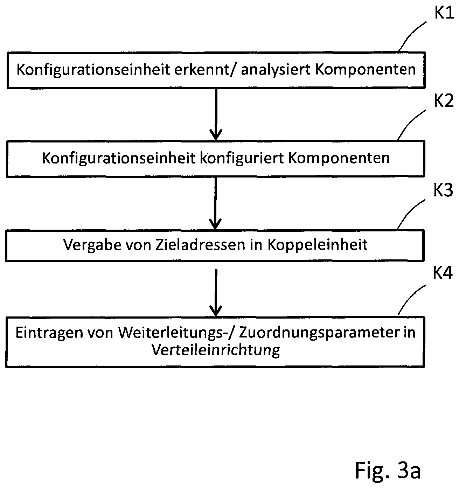

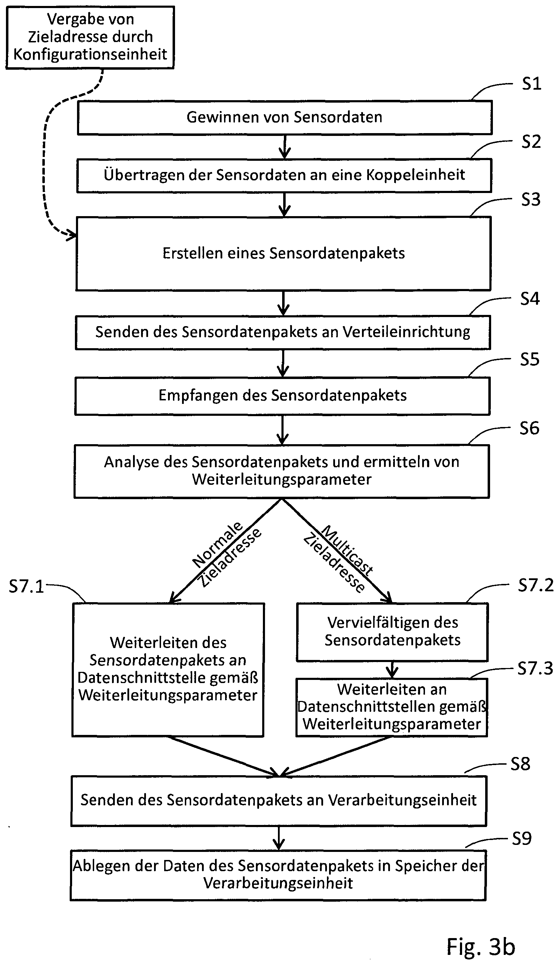

In den Figuren 3a und 3b ist ein schematischer Arbeitsablauf des erfindungsgemäßen Systems zur Verteilung von Sensordaten dargestellt, wobei Figur 3a den Ablauf zur Konfiguration des Systems und Figur 3b die Verteilung Sensorwerten an Verarbeitungseinheiten zeigen. In einer bevorzugten Ausführungsform erfolgt die Konfiguration über ein von dem lokalen Bussystem unabhängiges Datenkommunikationssystem, beispielsweise Ethernet oder CAN-Bus.

Zur Konfiguration des Systems werden in einem ersten Schritt K1 durch die Steuereinheit die angeschlossenen Geräte abgefragt und ermittelt. Die Steuereinheit erhält von den mit der Verteileinrichtung verbundenen Komponenten, insbesondere wenigstens einer Koppeleinheit, Verarbeitungseinheit und gegebenenfalls Sensor eine Information über deren Eigenschaft, Typ, Adresse, Identifikation und/ oder Verwendungszweck. Darüber hinaus wird vorzugsweise eine Information über den physikalischen Speicher, soweit vorhanden und zugreifbar, der Steuereinheit verfügbar.

Die Information über den physikalischen Speicher, insbesondere der wenigstens einen Verarbeitungseinheit, umfasst die Speicheradressen des Speichers. Aus den Informationen zu den physikalischen Speicheradressen der Komponenten definiert die Steuereinheit den Adressraum für das Datenkommunikationsnetzwerk 80. In dem Adressraum können neben Zieladressen für Speicherzugriffe jedoch auch für wenigstens eine Koppeleinheit 36a, 36b, 36c Zieladressen für das Festlegen von Zieladressen definiert sein. Grundsätzlich betrifft jede Speicheradresse nur eine Komponente des Systems. Sollen Daten an mehrere Komponenten gleichzeitig verteilt werden, so können diese Komponenten gleich definierte Adressen, zumindest gleich definierte Zieladressen im Adressraum des Datenkommunikationsnetzwerks 80, aufweisen. Hierbei spricht man von Mehrfachversand-Adressen, welche vorzugsweise gesondert in der Definition des Adressraums aufgeführt sind.

Aus den Abfrageergebnissen erstellt die Steuereinheit eine Start-Konfiguration des Systems, insbesondere zur Verarbeitung von Sensordaten der Sensoren durch eine Verarbeitungseinheit. Insbesondere erstellt die Steuereinheit aus dem definierten Adressraum Weiterleitungsparameter für die Verteileinrichtung, so dass der Verteileinrichtung eine Zuordnung von Datenschnittstelle zu Zieladresse vorgegeben werden kann. Im Schritt K2 übermittelt die Steuereinheit der Verteileinrichtung eine entsprechende Konfiguration. Weiterhin erstellt im Schritt K3 die Steuereinheit eine Konfiguration der Koppeleinheit und/ oder der Verarbeitungseinheit hinsichtlich einer zu verwendende Zieladresse für das Versenden von Daten, insbesondere Sensordatenpakete und/ oder Verarbeitungsergebnisse, bereit.

In einem Schritt K4 werden die von der Steuereinheit erstellten Weiterleitungsparameter in der Verteileinrichtung eingetragen und aktiviert.

In der Figur 3b wird schematisch die Verteilung von Sensordaten aufgezeigt. In einem ersten Schritt S1 werden Sensordaten durch einen Sensor ermittelt. Die Sensordaten werden in einem Schritt S2 an die Koppeleinheit übertragen. Die Übertragung erfolgt beispielsweise über eine direkte Signalleitung. Dazu weist beispielsweise die Koppeleinheit eine Schnittstelle gemäß dem Camera Link (CL) Standard, dem High-Level Data Link Control (HDLC) Standard und/ oder der Common Detector Interface- (CDI) Spezifikation auf. Selbstverständlich kann eine andere Schnittstelle an der Koppeleinheit zum Empfang und/ oder Anschluss eines Sensors vorgesehen sein. Alternativ kann die Koppeleinheit am Sensor integriert sein.

In einem Schritt S3 erstellt die Koppeleinheit aus den Sensordaten ein Sensordatenpaket. Das Sensordatenpaket umfasst als Nutzdaten Teile der Sensordaten. Weiterhin wird im Schritt S3 dem Sensordatenpaket von der Koppeleinheit eine Zieladresse vorgegeben. Die Zieladresse beschreibt eine physikalische Speicheradresse einer Verarbeitungseinheit, welche zur Verarbeitung der Sensordaten bestimmt ist. Das Sensordatenpaket wird an einer Schnittstelle zum Datenkommunikationsnetzwerk, insbesondere einer PCIe oder Rapid I/O, bereitgestellt.

Im Schritt S4 wird das Sensordatenpaket über die Schnittstelle von der Koppeleinheit an die Verteileinrichtung gesendet. Die Verteileinrichtung empfängt an der entsprechenden Datenschnittstelle das Sensordatenpaket (Schritt S5).

Die Verteileinrichtung analysiert das Sensordatenpaket hinsichtlich der Zieladresse (Schritt S6). Die Verteileinrichtung ermittelt aus der Zieladresse unter Verwendung von Weiterleitungsparametern eine oder mehrere Datenschnittstellen (Schritte S7.1-7.3).

Über die in den Schritten S7.1-7.3 ermittelten Datenschnittstellen wird im Schritt S8 das entsprechende Sensordatenpaket an die (Ziel-)Komponenten, beispielsweise Verarbeitungseinheit, welche einen Speicher mit der Zieladresse aufweist, gesendet. Im Schritt S9 wird das Sensordatenpaket von der Zielkomponente empfangen und die enthaltenen Sensordaten an der Zielspeicheradresse abgelegt.

Die Verteileinrichtung ermittelt in den Schritten S7.1-7.3 aus dem Sensordatenpaket Weiterleitungsparameter. Insbesondere ermittelt die Verteileinrichtung, ob es sich bei der Zieladresse um eine Mehrfachverteilungs-Adresse handelt, oder um eine le" Zieladresse, d.h. die Zieladresse ist nur einmal als physikalische Speicheradresse im Bussystem vorhanden. Handelt es sich um eine "normale" Zieladresse, ermittelt die Verteileinrichtung beispielsweise einer Zuordnungstabelle eine Datenschnittstelle der Verteileinrichtung, welche mit der Komponente, die den physikalischen Speicher zur Zieladresse betrifft. Die Verteileinrichtung leitet das Sensordatenpaket an die entsprechende Datenschnittstelle weiter (S7.1)

Handelt es sich bei der Zieladresse um eine Mehrfachverteilungs-Adresse erkennt dies die Verteileinrichtung aus einem entsprechenden Eintrag sowie der Definition im Adressraum des Datenkommunikationsnetzwerks. Entsprechend der Anzahl der betroffenen Komponenten, welche die Mehrfachverteilungs-Zieladresse gemeinsam als physikalische Speicheradresse haben, vervielfältigt (S7.2) die Verteileinrichtung das Sensordatenpaket und übergibt die Sensordatenpakete den der Mehrfachverteilungs-Zieladresse korrespondierenden Datenschnittstellen der Verteileinrichtung (S7.3).

In einer besonderen Ausführungsform kann beispielsweise die Steuereinheit die Zieladresse, welche durch die Koppeleinheit dem Sensordatenpaket vorgegeben wird, beeinflussen. In einer besonders bevorzugten Ausführungsform werden Gruppen von Verarbeitungseinheiten verwendet. Die verschränkte Bearbeitung (interleaved processing) der Banknoten-Daten stellt eine einfache zeitliche Parallelisierung dar. Bei einer verschränkten Bearbeitung mit einem Verschränkungsfaktor V werden Verarbeitungseinheiten in V gleich große Gruppen aufgeteilt. Eine erste Gruppe der Verarbeitungseinheiten erhält die Sensordaten der Banknoten N, N+V, N+2^{∗}V...; die zweite Gruppe erhält die Sensordaten der Banknoten N+1, N+V+1, N+2^{∗}V+... und die letzte Gruppe von Verarbeitungseinheiten erhält die Sensordaten der Banknoten N+V-1, N+2^{∗}V-1, N+3^{∗}V-1... Selbstverständlich kann anstatt einer Gruppe an Verarbeitungseinheiten lediglich jeweils eine Verarbeitungseinheit vorgesehen sein.

Die verschränkte Bearbeitung basiert auf dem Umstand, dass die Auswertung einer Banknote völlig unabhängig von der Bearbeitung anderer Banknoten erfolgen kann. Daher erfordert dieses Verfahren auch keine besondere Kommunikation zwischen den genannten Gruppen von Verarbeitungseinheiten. Die verschränkte Bearbeitung der Sensordaten hat den Vorteil, dass man auf einfache Weise eine Parallelisierung erhält, ohne die Auswerte-Algorithmen explizit zu parallelisieren und sie bringt einen zusätzlichen Effizienzgewinn, wenn in die Verarbeitungseinheiten weniger Banknoten-Daten eingespielt werden, da damit die Belastung der Hauptspeicher-Schnittstelle deutlich reduziert werden kann.

Insbesondere kann die Steuereinheit der jeweiligen Koppeleinheit entsprechend einer Reihenfolge von Banknoten bzw. einer bestimmten Taktung eine Zieladresse vorgeben, wodurch eine verschränkte Bearbeitung der Sensordaten durch die Verarbeitungseinheiten möglich ist.

In einer Ausgestaltung könnte zur verschränkten Bearbeitung die Mehrfachverteilungs-Funktionalität verwendet werden. Insbesondere wäre denkbar, eine Vielzahl, vorzugsweise alle, an der Verteileinrichtung ankommende Sensordatenpakete an eine Vielzahl, vorzugsweise allen, Datenschnittstellen, die mit Verarbeitungseinheiten verbunden sind, auszugeben. Die Verarbeitungseinheiten erhalten somit weit mehr Sensordaten als benötigt und müssen nicht-benötigte Sensordaten ignorieren bzw. ausfiltern.

Mit dem dargestellten Verfahren ist es nunmehr möglich, Sensordaten direkt in den Speicher einer Verarbeitungseinheit abzulegen, ohne dass umfangreiche Adressumwandlungen notwendig sind. Darüber hinaus kann mithilfe des dargestellten Verfahrens ein hoher Parallelisierungsgrad erzielt werden. Insbesondere können Sensordaten, die von mehreren Verarbeitungseinheiten genutzt werden, zu diesen Verarbeitungseinheiten gleichzeitig verteilt werden (Mehrfachverteilungs-Funktionalität), ohne die Koppeleinheiten und deren Schnittstelle zur Verteileinrichtung durch ein Mehrfachsenden derselben Daten sowie das Datenkommunikationsnetzwerk zu belasten. Somit stehen auch Sensordaten mehreren Verarbeitungseinheiten gleichzeitig zur Verfügung. Die entsprechenden Verarbeitungseinheiten erhalten dieselben Sensordaten und führen unterschiedliche Bearbeitungsschritte durch. Eine Mehrfachverteilung auf Verarbeitungseinheiten führt somit zu einer schnelleren Bearbeitung der Sensordaten.

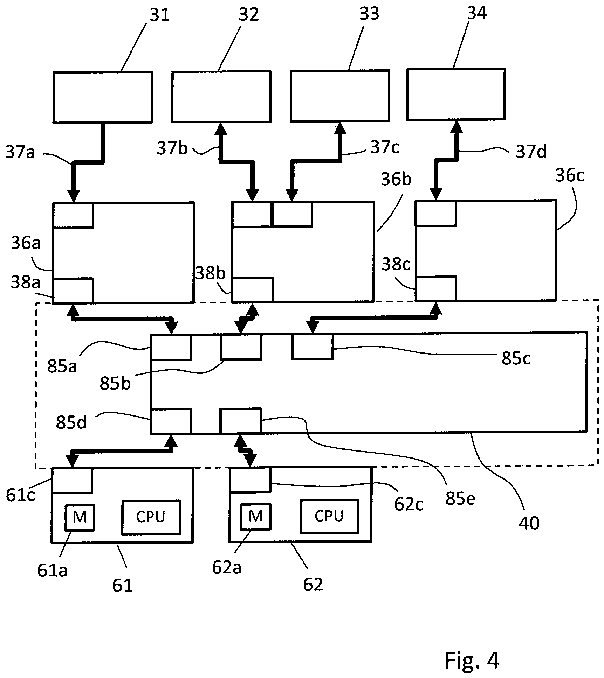

In der Figur 4 ist eine weitere schematische Darstellung eines Systems zur Verteilung von Sensordaten gemäß der Erfindung dargestellt. Das System umfasst mehrere Sensoren 31, 32, 33, 34. Die Sensoren 31, 34 sind jeweils über eine Signalleitung 37a, 37d mit einer Sensorschnittstelle einer Koppeleinheit 36a, 36c verbunden. Der Sensor 31 sendet über die Signalleitung 37a Sensordaten an die Koppeleinheit 36a, der Sensor 34 sendet über die Signalleitung 37d Sensordaten an die Koppeleinheit 36c.

Die Sensoren 32, 33 sind jeweils über einer Signalleitung 37b, 37c mit einer Sensorschnittstelle einer gemeinsamen Koppeleinheit 36b verbunden. Sowohl der Sensor 32 als auch der Sensor 33 senden Sensordaten an die Koppeleinheit 36b. Die Koppeleinheit 36b hat mehrere, in diesem Ausführungsbeispiel zwei, Sensorschnittstellen.

Die Koppeleinheiten 36a, 36b, 36c weisen jeweils eine Kommunikationsschnittstelle 38a, 38b, 38c auf. Über jeweils die Kommunikationsschnittstellen 38a, 38b, 38c stellen die Koppeleinheiten 36a, 36b, 36c eine Verbindung zu einem Datenkommunikationsnetzwerk (gestricheltes Kästchen) her. Insbesondere ist die Koppeleinheit 36a über die Kommunikationsschnittstelle 38a mit einer Datenschnittstelle 85a, die Koppeleinheit 36b über die Kommunikationsschnittstelle 38b mit einer Datenschnittstelle 85b und die Koppeleinheit 36c über die Kommunikationsschnittstelle 38c mit einer Datenschnittstelle 85c einer Verteileinrichtung 85 verbunden.

Die Koppeleinheiten 36a, 36b, 36c analysieren empfangene Sensordaten und formatieren die Sensordaten in ein Format gemäß ihrer Kommunikationsschnittstelle 38a, 38b, 38c, insbesondere gemäß dem Datenkommunikationsnetzwerk, beispielsweise PCIe. Mit anderen Worten, die Koppeleinheiten 36a, 36b, 36c erstellen aus den Sensordaten formatierte Sensordatenpakete gemäß einem vorgegebenen Protokoll. Weiterhin können die Koppeleinheiten 36a, 36b, 36c ausgebildet sein, die empfangenen Sensordaten einer Vorbearbeitung zu unterziehen, bevor sie als Sensordatenpaket dem lokalen Bussystem übergeben werden. Beispielsweise können die Koppeleinheiten 36a, 36b, 36c die Sensordaten mit einem Filter-Algorithmus, bspw. Gaußfilter, Sobelfilter, Rangordnungsfilter, wie Erosionsfilter oder Medianfilter, belegen, um eine Vorbearbeitung der Sensordaten vorzunehmen, die Sensordaten anzureichern oder lediglich bestimmte Teilinformationen der Sensordaten für das Sensordatenpaket zu verwenden.

Die Verteileinrichtung 85 dient analog zu den beispielhaften Darstellungen aus den Fig. 1 bis 3b zur Verteilung von Sensorpaketen. Die Verteileinrichtung 85 ermittelt aus den empfangenen Sensordatenpaketen eine Zieladresse. Aus dem durch das Datenkommunikationsnetzwerk und mittelbar durch die gegebenenfalls vorhandene Steuereinheit definierten Adressraum sowie einer Zuordnungstabelle von Zieladresse zu Datenschnittstelle 85a-e ermittelt die Verteileinrichtung 85, ob Zieladresse eine "normale" Zieladresse beschreibt oder eine Mehrfachverteilungs-Zieladresse beschreibt. Ist die Zieladresse eine "normale" Zieladresse, ermittelt die Verteileinrichtung 85 die der Zieladresse zugehörige Datenschnittstelle 85a-e. Betrifft die Zieladresse eine Mehrfachverteilungs-Zieladresse analysiert die Verteileinrichtung 85 die von der Mehrfachverteilungs-Zieladresse betroffenen "normalen" Zieladressen, Datenschnittstellen 85a-e und/ oder Komponenten im lokalen Bussystem sowie deren Anzahl. Die Verteileinrichtung 85 vervielfältigt das betreffende Sensordatenpaket entsprechend der ermittelten Anzahl und übergibt die vervielfältigten Sensordatenpakete der entsprechenden "normalen" Zieladresse bzw. der zugehörigen Datenschnittstellen 85a-e.

Die Koppeleinheit 36b weist zwei Sensorschnittstellen auf und ist entsprechend mit zwei Sensoren 32, 33 verbunden. Die Koppeleinheit 36b empfängt über ihre Sensorschnittstellen Sensordaten der Sensoren 32, 33. Analog zur Koppeleinheit 36a erstellt die Koppeleinheit 36b aus jeweils den Sensordaten der Sensoren 32, 33 Sensordatenpakete und gibt diese über die Kommunikationsschnittstelle 38b aus. Die Sensordaten der Sensoren 32, 33 werden von der Koppeleinheit 36b getrennt voneinander bearbeitet und jedem der entsprechend erstellten Sensordatenpakete eine Zieladresse zugeordnet.

Weiterhin ist die Verteileinrichtung 85 über die Datenschnittstellen 85d und 85e mit den Verarbeitungseinheiten 61, 62 über die Busschnittstelle 61c bzw. Busschnittstelle 62c verbunden. Die Verteileinrichtung 85 sendet ein an eine Datenschnittstelle 85d, 85e weitergeleitetes Sensordatenpaket an wenigstens eine Verarbeitungseinheit 61, 62. Das Sensordatenpaket weist eine Zieladresse auf, das einer physikalischen Speicheradresse des Speichers 61a, 62a der Verarbeitungseinheit 61, 62 entspricht, wodurch das von der Busschnittstelle 61c bzw. 62c empfangene Sensordatenpaket direkt zu der betreffenden Speicheradresse abgelegt wird.

Grundsätzlich kann das vorliegende Schema zum Verteilen von Sensordaten nicht nur für Sensordaten verwendet werden. Vielmehr ist ein Verteilen von Daten jeglicher Herkunft über das Datenkommunikationsnetzwerk denkbar. Wie der Figur 4 entnommen werden kann, könnte wenigstens eine der Verarbeitungseinheiten 61, 62 ausgelegt sein, Daten bzw. Ergebnisse, beispielsweise durch die Verarbeitung von Sensordaten, an eine weitere Verarbeitungseinheit 61, 62 zu senden. Demensprechend kann der Datenfluss in beide Richtungen, nämlich von und zu der Koppeleinheit 36a, 36b, 36c und/ oder von und zu der Verarbeitungseinheit 61, 62 im Bussystem erfolgen. Darüber hinaus wäre eine Kommunikation von einer Koppeleinheit 36a, 36b, 36 zu einem Sensor 31, 32, 33, 34 denkbar (beispielhaft zwischen den Koppeleinheiten 36b, 36c zu den Sensoren 32, 33, 34 gezeigt), beispielsweise zu dessen nachträglichen Kalibrierung.

Wie in der Figur 2 bereits gezeigt, kann eine Steuereinheit vorgesehen sein. Die Steuereinheit dient zur Konfiguration und Steuerung der Komponenten des Systems. Insbesondere kann auf die Kommunikationsschnittstellen 38a, 38b, 38c der Koppeleinheiten 36a, 36b, 36c in der Vergabe von Zieladressen Einfluss genommen werden. Die Steuereinheit und eine Verarbeitungseinheit 61, 62 kann auch vereinheitlicht in einer Verarbeitungseinheit 61, 62 ausgebildet sein, sodass beispielsweise die Verarbeitungseinheit 61 die Aufgaben und Funktionen der Steuereinheit übernimmt.

Die Koppeleinheiten 36a, 36b, 36c sowie die Verarbeitungseinheiten 61, 62 können zusätzlich miteinander über ein vom Datenkommunikationsnetzwerk getrennten Kommunikationssystem, beispielsweise Ethernet oder CAN-Bus verbunden sein.

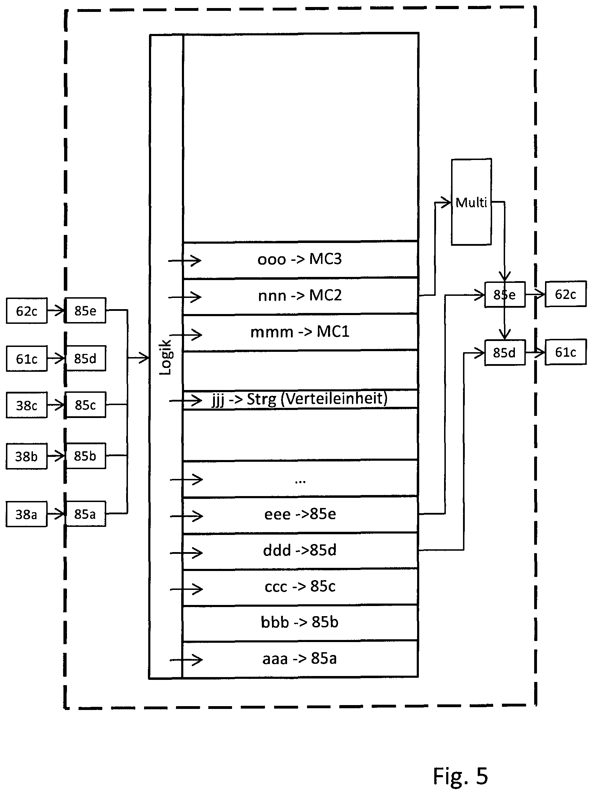

Die Figur 5 zeigt schematisch und beispielhaft einen Adressraum des Bussystems aus Figur 4 mit einer Zuordnung von Datenschnittstellen der Verteileinheit 85 und Zieladressen hinsichtlich der Verteilung von (Sensor-)Datenpaketen anhand einer Zuordnungstabelle.

Zur Verteilung von Sensordaten werden bei der Erstellung von Sensordatenpakete durch die Koppeleinheiten 36a, 36b, 36c Zieladressen bestimmt. Beispielsweise ein Sensordatenpaket der Kommunikationsschnittstelle 38a der Koppeleinheit 36a weist als Zieladresse "ddd" auf. Gemäß der Adresszuordnung betrifft ddd eine Speicheradresse der Verarbeitungseinheit 61. Entsprechend ermittelt über eine Logik die Verteileinrichtung 85, dass das Sensordatenpaket mit der Zieladresse ddd an die Datenschnittstelle 85d weitergeleitet werden muss. Über die Datenschnittstelle 85d wird das entsprechende Sensordatenpaket im Speicher 61c der Verarbeitungseinheit 61 abgelegt.

Des Weiteren wird als Beispiel ein Sensordatenpaket mit der Zieladresse "eee" an die Datenschnittstelle 85e weitergeleitet, wodurch das Sensordatenpaket im Speicher 62c der Verarbeitungseinheit 62 abgelegt wird. Empfängt die Verteileinrichtung 85 ein Sensordatenpaket mit der Zieladresse nnn, erkennt die Verteileinrichtung, dass es sich um eine Mehrfachverteilungs-Adresse MC 2 handelt. Gemäß den von der Verteileinrichtung aus der Zieladresse ermittelten Weiterleitungsparametern ist der Verteileinrichtung bekannt, dass dieses Sensordatenpaket an zwei Datenschnittstellen 85d und 85e auszugeben ist. Entsprechend wird das Sensordatenpaket mit dem Faktor zwei vervielfacht (Multi) und an die Datenschnittstellen 85d und Datenschnittstellen 85e ausgegeben. Die Sensordatenpakete werden von den Datenschnittstellen 85d und 85e an die Verarbeitungseinheiten 61, 62 gesendet. Die Sensordatenpakete mit den Zieladressen nnn werden an einer entsprechenden Speicheradresse der Verarbeitungseinheiten 61, 62 abgelegt.

Analog zur oben beschriebenen Verteilung von Sensordaten können beliebige Datenpakete im Datenkommunikationsnetzwerk zwischen wenigstens einer Koppeleinheit 36a, 36b, 36c und wenigstens einer Verarbeitungseinheit 61, 62 untereinander ausgetauscht werden.

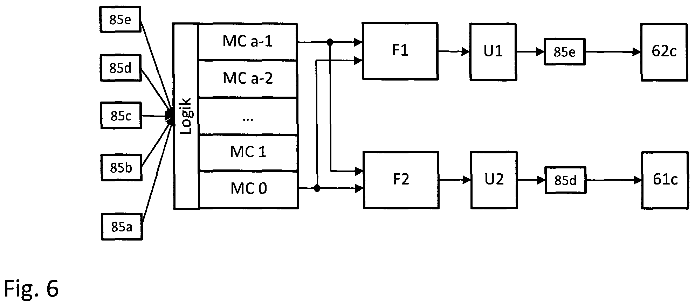

Die Figur 6 zeigt schematisch die Mehrfachverteilung von Daten gemäß einem weiteren Beispiel.

Die eingehende Datenpakete an den Datenschnittstellen 85a-e der Verteileinrichtung werden darauf hin untersucht, ob sie in einen konfigurierten Mehrfachverteilungs-Adressbereich MC 0, MC 1, MC a-2, MC a-1 fallen. Wenn dies der Fall, ist werden sie entsprechend der Mehrfachverteilungs-Funktionalität behandelt. Beispielsweise kann eine Verteileinrichtung bis zu 64 gleich große Adressbereiche als Mehrfachverteilungs-Adressen anbieten: a = 1...64.

Wenn ein Datenpaket an einer Datenschnittstelle 85a-e in den Mehrfachverteilungs-Adressraum fällt, wird aus der Zieladresse zunächst der zugehörige Adressbereich ermittelt (0, 1, ..., a-1). Für jede Datenschnittstelle 85a-e gibt es einen Filtervektor F1, F2 der festlegt, welche der a Adressbereiche über die Datenschnittstellen 85d, 85e weitergeleitet werden sollen (Duplizierung von Sendedaten). In dem Vektor können 0... a Bits gesetzt sein. Wenn für einen Adressbereich in keinem Filtervektor F1, F2 ein Bit gesetzt ist, dann werden die zugehörigen Datenpakete verworfen. Außerdem stellt die Verteileinrichtung sicher, dass ein Datenpaket nicht an die Datenschnittstelle 85a-e, welche das Datenpaket empfangen hat, zurückgesendet wird, und zwar auch dann, wenn das entsprechende Bit im Filtervektor dieser Datenschnittstelle gesetzt ist.

Zusätzlich können in einer Ausführungsform die Mehrfachverteilungs-Zieladressen spezifisch für jede Datenschnittstelle 85a-e in einen neuen (Ziel-)Adressbereich durch einen Adressumsetzer U1, U2 umgesetzt werden. Man kann Mehrfachverteilungs-Datenpakete damit in dieselben Adressbereiche wie "normale" Daten (normale Datenpakete) mit Einfachverteilungs-Zieladressen fallen lassen. Jeder der beispielsweise bis zu 64 Adressbereiche des Mehrfachverteilungs-Adressraums stellt einen logischen Kanal des Datenkommunikationsnetzwerks dar. Die umgesetzten Adressen müssen dann in den Bereich der normalen Zieladressen fallen, damit sie über die Datenschnittstelle weitergeleitet werden.

Die Koppeleinheiten (siehe beispielswiese Figur 2) können simultan Daten in beliebige Mehrfachverteilungs-Adressbereiche MC 0, MC 1, MC a-2, MC a-1 legen und mehrere Koppeleinheiten können simultan Daten in denselben Mehrfachverteilungs-Adressbereich einspeisen. In den Filtervektoren F1, F2 der Koppeleinheiten ist kein Bit gesetzt, da sie nur Daten produzieren.

## Patentansprüche

1. Verfahren zur Verteilung eines Datenstroms in einer
Wertdokumentbearbeitungsvorrichtung (1) von wenigstens einem Sensor (31, 32, 33, 34, 35) zu wenigstens einer Verarbeitungseinheit (61, 62, 63, 64, 65), wobei die Wertdokumentbearbeitungsvorrichtung (1) eine Verteileinrichtung (85) und wenigstens eine Verarbeitungseinheit (61, 62, 63, 64, 65) umfasst und die Verteileinrichtung (85) wenigstens zwei Datenschnittstellen (85a, 85b, 85c) aufweist,
**gekennzeichnet durch** folgenden Schritte:
a. Erstellen eines Sensordatenpakets, umfassend Sensordaten und eine Zieladresse, wobei die Zieladresse eine physikalische Speicheradresse einer der wenigstens einen Verarbeitungseinheit (61, 62, 63, 64, 65) beschreibt;
b. Senden des Sensordatenpakets an eine der Datenschnittstellen (85a, 85b, 85c) der Verteileinrichtung (85);
c. Empfangen des Sensordatenpakets an der einen Datenschnittstelle (85a, 85b, 85c) der Verteileinrichtung (85);
d. Weiterleiten des Sensordatenpakets durch die Verteileinrichtung (85) an die wenigstens eine Verarbeitungseinheit (61, 62, 63, 64, 65), wobei die Verteileinrichtung (85)
i. Weiterleitungsparameter gemäß der Zieladresse ermittelt und
ii. in Abhängigkeit von der Zieladresse des Sensordatenpakets und von Weiterleitungsparametern eine weitere Datenschnittstelle (85d, 85e) zur Ausgabe des Sensordatenpakets an die wenigstens eine Verarbeitungseinheit (61, 62, 63, 64, 65) auswählt;
e. Empfangen des Sensordatenpakets durch die wenigstens eine Verarbeitungseinheit (61, 62, 63, 64, 65); und
f. Ablegen der Sensordaten in der durch die Zieladresse gegebenen Speicheradresse der wenigstens einen Verarbeitungseinheit (61, 62, 63, 64, 65), wobei
die Verteileinrichtung (85) mittels wenigstens zwei Datenschnittstellen (85a, 85b, 85c) mit wenigstens zwei Verarbeitungseinheiten (61, 62, 63, 64, 65) verbunden ist, wobei die Verteileinrichtung (85) das empfangene Sensordatenpaket an zwei Datenschnittstellen (85d, 85e) weitergibt, wobei die Verteileinrichtung (85) das Sensordatenpaket entsprechend der Anzahl der Datenschnittstellen (85d, 85e) vervielfältigt.

2. Verfahren nach Anspruch 1, **dadurch gekennzeichnet, dass** die Sensordatenpakete entsprechend dem PCIe-Standard oder dem Rapid-IO-Standard transportiert werden.

3. Verfahren nach Anspruch 1 oder 2, **dadurch gekennzeichnet, dass** wenigstens eine Koppeleinheit (36a, 36b, 36c) bereitgestellt wird, wobei die wenigstens eine Koppeleinheit (36a, 36b, 36c) Sensordaten empfängt und das Sensordatenpaket zum Senden an die Verteileinrichtung (85) erstellt, wobei die wenigstens eine Koppeleinheit (36a, 36b, 36c) vorzugsweise die Zieladresse für das Sensordatenpaket bestimmt und dem Sensordatenpaket zuordnet.

4. Verfahren nach einem der vorhergehenden Ansprüche, **dadurch gekennzeichnet, dass** die Verteileinrichtung (85) die Weiterleitungsparameter mittels einer Weiterleitungstabelle ermittelt.

5. Verfahren nach einem der vorhergehenden Ansprüche, **dadurch gekennzeichnet, dass** wenigstens eine der wenigstens einen Verarbeitungseinheit (61, 62, 63, 64, 65) zum Senden von Verarbeitungsergebnissen an die Verteileinrichtung (85) als Verarbeitungsergebnispaket ausgebildet ist, wobei das Verarbeitungsergebnispaket eine Zieladresse umfasst und die Verteileinrichtung (85) das Verarbeitungsergebnispaket entsprechend der Zieladresse an eine Datenschnittstelle (85d, 85e) ausgibt.

6. Verfahren nach einem der vorhergehenden Ansprüche, **dadurch gekennzeichnet, dass** eine Steuereinheit (86) den Sensor (31, 32, 33, 34, 35), die Verteileinrichtung (85) und/ oder die wenigstens eine Verarbeitungseinheit (61, 62, 63, 64, 65), konfiguriert.

7. Verfahren nach Anspruch 6, **dadurch gekennzeichnet, dass** die Steuereinheit (86) die Zieladresse zum Versenden von Daten von der wenigstens einen Verarbeitungseinheit (61, 62, 63, 64, 65) vorgibt, wobei vorzugsweise die Steuereinheit (86) die zu verwendende Zieladresse über die Verteileinrichtung (85) versendet.

8. Verfahren nach Anspruch 6 oder 7 und Anspruch 3, **dadurch gekennzeichnet, dass** die Steuereinheit (86) für jede Banknote, vorzugsweise gemäß einer Reihenfolge, insbesondere einer N-ten Banknote und/ oder einer Position, der Koppeleinheit (36a, 36b, 36c) und/ oder der Verarbeitungseinheit (61, 62, 63, 64, 65) zum Versenden von Daten eine bestimmte Zieladresse vorgibt.

9. Verfahren nach einem der Ansprüche 6 bis 8, **dadurch gekennzeichnet, dass** die Steuereinheit (86) an die Verteileinrichtung (85) Weiterleitungsparameter sendet, der Verteileinrichtung (85) somit Weiterleitungsparameter festlegt und der Zieladresse eine Datenschnittstelle (85a, 85b, 85c) der Verteileinrichtung (85) zuordnet.

10. System zum Verteilen von Sensordaten in einer Wertdokumentbearbeitungsvorrichtung (1), **gekennzeichnet durch**
a. eine Verteileinrichtung (85), mit wenigstens zwei Datenschnittstellen (85a, 85b, 85c), wobei die Verteileinrichtung (85) ausgebildet ist, ein Sensordatenpaket zu empfangen, zu dem Sensordatenpaket in Abhängigkeit einer im Sensordatenpaket enthaltenen Zieladresse Weiterleitungsparameter zu ermitteln und in Abhängigkeit der Zieladresse und Weiterleitungsparameter das Sensordatenpaket an eine Datenschnittstelle auszugeben; und
b. eine Verarbeitungseinheit (61, 62, 63, 64, 65), wobei die Verarbeitungseinheit (61, 62, 63, 64, 65) eine Recheneinheit und einen Speicher (61a, 62a) umfasst, der Speicher (61a, 62a) eine physikalische Speicheradresse aufweist, welche durch die Zieladresse beschrieben ist und die Verarbeitungseinheit (61, 62, 63, 64, 65) mit der Datenschnittstelle, an der das Sensordatenpaket ausgegeben wird, verbunden ist, wobei
die Verteileinrichtung (85) mittels wenigstens zwei Datenschnittstellen (85a, 85b, 85c) mit wenigstens zwei Verarbeitungseinheiten (61, 62, 63, 64, 65) verbunden ist, wobei die Verteileinrichtung (85) das empfangene Sensordatenpaket an zwei Datenschnittstellen (85d, 85e) weitergibt, wobei die Verteileinrichtung (85) das Sensordatenpaket entsprechend der Anzahl der Datenschnittstellen (85d, 85e) vervielfältigt.

11. System nach Anspruch 10, weiterhin umfassend eine Koppeleinheit, wobei die Koppeleinheit (36a, 36b, 36c) zum Erstellen des Sensordatenpakets ausgebildet und mit der Verteileinrichtung (85) verbunden ist, wobei vorzugsweise die Koppeleinheit (36a, 36b, 36c) Sensordaten gemäß ein vorgegebenes Protokoll zu einem Sensordatenpaket formatiert und dem Sensordatenpaket die Zieladresse zuweist.

12. System nach Anspruch 11, **dadurch gekennzeichnet, dass** die Koppeleinheit mit wenigstens einem Sensor (31, 32, 33, 34, 35) verbunden ist.

13. System nach einem der Ansprüche 10 bis 12, **dadurch gekennzeichnet, dass** die Verteileinrichtung eine Weiterleitungstabelle mit Weiterleitungsparametern aufweist.

14. System nach einem der Ansprüche 10 bis 13, weiterhin umfassend eine Steuereinheit (86), wobei die Steuereinheit (86) ausgebildet ist, die Verteileinrichtung (85) und/oder die Verarbeitungseinheit (61, 62, 63, 64, 65) zu konfigurieren, vorzugsweise die Zieladresse von zu versendenden Datenpaketen, bevorzugt Banknotenspezifisch, insbesondere gemäß einer Reihenfolge, und/ oder die Weiterleitungsparameter für die Verteileinrichtung festzulegen.

15. System nach Anspruch 14, **dadurch gekennzeichnet, dass** die Steuereinheit (86) als Teil und/ oder in Kombination mit einer der wenigstens einen Verarbeitungseinheit (61, 62, 63, 64, 65) ausgebildet ist.

16. System nach Anspruch 11 oder 12, **dadurch gekennzeichnet, dass** das System ausgebildet ist, das Sensordatenpaket gemäß dem PCIe-Standard oder Rapid-IO-Standard zu transportiert, wozu die Verteileinrichtung (85) als PCIe-Switch bzw. Rapid-IO-Switch ausgebildet ist und die Koppeleinheit (36a, 36b, 36c) und die Verarbeitungseinheit (61, 62, 63, 64, 65) entsprechende PCIe- bzw. Rapid-IO-Schnittstellen aufweisen.

17. System nach einem der Ansprüche 10 bis 16, **dadurch gekennzeichnet, dass** jede Zieladresse wenigstens einer Datenschnittstelle (85a, 85b, 85c) der Verteileinrichtung (85) zugewiesen ist.

18. System nach Anspruch 11, 12 oder 16, **dadurch gekennzeichnet, dass** die wenigstens eine Koppeleinheit (36a, 36b, 36c) eine Kommunikationsschnittstelle gemäß dem Camera Link (CL) Standard, dem High-Level Data Link Control (HDLC) Standard und/ oder der Common Detector Interface- (CDI) Spezifikation zur Verbindung mit einem Sensor (31, 32, 33, 34, 35) umfasst.

19. System nach Anspruch 11, 12, 16 oder 18, **dadurch gekennzeichnet, dass** die Koppeleinheit (36a, 36b, 36c) ein FPGA aufweist, wobei das FPGA zur Formatierung des Sensordatenpakets eingerichtet ist.

20. System nach Anspruch 11, 12, 16, 18 oder 19, **dadurch gekennzeichnet, dass** wenigstens eine der wenigstens einen Koppeleinheit (36a, 36b, 36c) zwei Sensorschnittstellen zur jeweiligen Verbindung mit einem Sensor (31, 32, 33, 34, 35) aufweist, wobei die Koppeleinheit (36a, 36b, 36c) ausgebildet ist, über jede der Kommunikationsschnittstellen Sensordaten zu empfangen und jeweils von den Sensordaten Sensordatenpakete zu erstellen, wobei jedem Sensordatenpaket eine Zieladresse zugeordnet wird und vorzugsweise jedes Sensordatenpaket über eine Kommunikationsschnittstelle zur Verteileinrichtung (85) gesendet wird.

21. System nach einem der Ansprüche 10 bis 20, **dadurch gekennzeichnet, dass** das System zur Durchführung eines Verfahren nach einem der Ansprüche 1 bis 9 ausgebildet ist.

## Claims

1. A method for distributing a data stream in a value-document processing apparatus (1) from at least one sensor (31, 32, 33, 34, 35) to at least one processing unit (61, 62, 63, 64, 65), wherein the value-document processing apparatus (1) comprises a distributing device (85) and at least one processing unit (61, 62, 63, 64, 65) and the distributing device (85) has at least two data interfaces (85a, 85b, 85c), **characterized by** the following steps:
a. creating a sensor data packet comprising sensor data and a target address, wherein the target address describes a physical memory address of one of the at least one processing unit (61, 62, 63, 64, 65);
b. sending the sensor data packet to one of the data interfaces (85a, 85b, 85c) of the distributing device (85);
c. receiving the sensor data packet at the one data interfaces (85a, 85b, 85c) of the distributing device (85);
d. relaying the sensor data packet by the distributing device (85) to the at least one processing unit (61, 62, 63, 64, 65), wherein the distributing device (85)
i. establishes relaying parameters according to the target address and
ii. selects a further data interface (85d, 85e) for outputting the sensor data packet to the at least one processing unit (61, 62, 63, 64, 65) in dependence on the target address of the sensor data packet and on relaying parameters;
e. receiving the sensor data packet by the at least one processing unit (61, 62, 63, 64, 65); and
f. depositing the sensor data in the memory address given by the target address of the at least one processing unit (61, 62, 63, 64, 65), wherein the distributing device (85) is connected by means of at least two data interfaces (85a, 85b, 85c) to at least two processing units (61, 62, 63, 64, 65), wherein the distributing device (85) passes on the received sensor data packet to two data interfaces (85d, 85e), wherein the distributing device (85) copies the sensor data packet according to the number of the data interfaces (85d, 85e).

2. The method according to claim 1, **characterized in that** the sensor data packets are transported according to the PCIe standard or the Rapid-IO standard.

3. The method according to claim 1 or 2, **characterized in that** at least one coupling unit (36a, 36b, 36c) is supplied, wherein the at least one coupling unit (36a, 36b, 36c) receives sensor data and creates the sensor data packet for sending to the distributing device (85), wherein at least one coupling unit (36a, 36b, 36c) preferably determines the target address for the sensor data packet and allocates it to the sensor data packet.

4. The method according to any of the preceding claims, **characterized in that** the distributing device (85) establishes the relaying parameters by means of a relaying table.

5. The method according to any of the preceding claims, **characterized in that** at least one of the at least one processing units (61, 62, 63, 64, 65) is designed for sending processing results to the distributing device (85) as a processing-result package, wherein the processing-result package comprises a target address and the distributing device (85) outputs the processing-result package to a data interface (85d, 85e) corresponding to the target address.

6. The method according to any of the preceding claims, **characterized in that** a control unit (86) configures the sensor (31, 32, 33, 34, 35), the distributing device (85) and/or the at least one processing unit (61, 62, 63, 64, 65).

7. The method according to claim 6, **characterized in that** the control unit (86) stipulates the target address for sending data from the at least one processing unit (61, 62, 63, 64, 65), wherein preferably the control unit (86) sends the target address to be employed via the distributing device (85).

8. The method according to claim 6 or 7 and claim 3, **characterized in that** for each bank note the control unit (86) stipulates to the coupling unit (36a, 36b, 36c) and/or to the processing unit (61, 62, 63, 64, 65) a certain target address for sending data, preferably according to an order, in particular of an N-th bank note and/or a location.

9. The method according to any of claims 6 to 8, **characterized in that** the control unit (86) sends relaying parameters to the distributing device (85), therefore specifying relaying parameters for the distributing device (85) and allocating a data interface (85a, 85b, 85c) of the distributing device (85) to the target address.

10. A system for distributing sensor data in a value-document processing apparatus (1), **characterized by**
a. a distributing unit (85) having at least two data interfaces (85a, 85b, 85c), wherein the distributing device (85) is designed to receive a sensor data packet, to establish relaying parameter to the sensor data packet in dependence on a target address contained in the sensor data packet, and to output the sensor data packet to a data interface in dependence on the target address and relaying parameters; and
b. a processing unit (61, 62, 63, 64, 65), wherein the processing unit (61, 62, 63, 64, 65) comprises a computing unit and a memory (61a, 62a), the memory (61a, 62a) has a physical memory address which is described by the target address, and the processing unit (61, 62, 63, 64, 65) is connected to the data interface to which the sensor data packet is outputted,
the distributing device (85) is connected by means of at least two data interfaces (85a, 85b, 85c) to at least two processing units (61, 62, 63, 64, 65), wherein the distributing device (85) passes on the received sensor data packet to two data interfaces (85d, 85e), wherein the distributing device (85) copies the sensor data packet according to the number of the data interfaces (85d, 85e).

11. The system according to claim 10, further comprising a coupling unit, wherein the coupling unit (36a, 36b, 36c) is designed for creating the sensor data packet and is connected to the distributing device (85), wherein preferably the coupling unit (36a, 36b, 36c) formats sensor data to a sensor data packet according to a stipulated protocol and assigns the target address to the sensor data packet.

12. The system according to claim 11, **characterized in that** the coupling unit is connected to at least one sensor (31, 32, 33, 34, 35).

13. The system according to any of claims 10 to 12, **characterized in that** the distributing device has a relaying table having relaying parameters.

14. The system according to any of claims 10 to 13, further comprising a control unit (86), wherein the control unit (86) is designed to configure the distributing device (85) and/or the processing unit (61, 62, 63, 64, 65), preferably to set the target address of data packets to be sent, preferably bank-note-specifically, in particular according to an order, and/or the relaying parameters for the distributing device.

15. The system according to claim 14, **characterized in that** the control unit (86) is designed as a part of and/or in combination with one of the at least one processing units (61, 62, 63, 64, 65).

16. The system according to claim 11 or 12, **characterized in that** the system is designed such that the sensor data packet is transported according to the PCIe standard or Rapid-IO standard, for which the distributing device (85) is designed as a PCIe switch or Rapid-IO switch and the coupling unit (36a, 36b, 36c) and the processing unit (61, 62, 63, 64, 65) have corresponding PCIe or Rapid-IO interfaces.

17. The system according to any of claims 10 to 16, **characterized in that** each target address is assigned to at least one data interface (85a, 85b, 85c) of the distributing device (85).

18. The system according to claim 11, 12 or 16, **characterized in that** the at least one coupling unit (36a, 36b, 36c) comprises a communication interface according to the Camera Link (CL) standard, the High-Level Data Link Control (HDLC) standard and/or the Common Detector Interface (CDI) specification for connecting to a sensor (31, 32, 33, 34, 35).

19. The system according to claim 11, 12, 16 or 18, **characterized in that** the coupling unit (36a, 36b, 36c) has a FPGA and the FPGA is set up for formatting the sensor data packet.

20. The system according to claim 11, 12, 16, 18 or 19, **characterized in that** at least one of the at least one coupling units (36a, 36b, 36c) has two sensor interfaces for respectively connecting to a sensor (31, 32, 33, 34, 35), wherein the coupling unit (36a, 36b, 36c) is designed to receive sensor data via each of the communication interfaces and to create sensor data packets respectively from the sensor data, wherein a target address is allocated to each sensor data packet and preferably each sensor data packet is sent via a communication interface to the distributing device (85).

21. The system according to any of claims 10 to 20, **characterized in that** the system is designed for carrying out a method according to any of claims 1 to 9.

## Revendications

1. Procédé de répartition d'un flux de données dans un dispositif de traitement de documents de valeur (1) par au moins un capteur (31, 32, 33, 34, 35) vers au moins une unité de traitement (61, 62, 63, 64, 65), cependant que le dispositif de traitement de documents de valeur (1) comprend une unité de répartition (85) et au moins une unité de traitement (61, 62, 63, 64, 65) et que l'unité de répartition (85) comprend au moins deux interfaces de données (85a, 85b, 85c), **caractérisé par** les étapes suivantes :
a. création d'un paquet de données de capteur comprenant des données de capteur et une adresse de destination, cependant que l'adresse de destination décrit une adresse mémoire physique d'une des au moins une unité de traitement (61, 62, 63, 64, 65) ;
b. envoi du paquet de données de capteur à une des interfaces de données (85a, 85b, 85c) de l'équipement de répartition (85) ;
c. réception du paquet de données de capteur à la une interface de données (85a, 85b, 85c) de l'équipement de répartition (85) ;
d. transfert du paquet de données de capteur, par l'équipement de répartition (85), à la au moins une unité de traitement (61, 62, 63, 64, 65), cependant que l'équipement de répartition (85)
i. détermine des paramètres de transfert suivant l'adresse de destination, et
ii. en fonction de l'adresse de destination du paquet de données de capteur et de paramètres de transfert, choisit une autre interface de données (85d, 85e) pour la délivrance du paquet de données de capteur à la au moins une unité de traitement (61, 62, 63, 64, 65) ;
e. réception du paquet de données de capteur par la au moins une unité de traitement (61, 62, 63, 64, 65) ; et
f. stockage des données de capteur dans l'adresse mémoire, donnée par l'adresse de destination, de la au moins une unité de traitement (61, 62, 63, 64, 65), cependant que l'équipement de répartition (85) est relié, au moyen d'au moins deux interfaces de données (85a, 85b, 85c), à aux moins deux unités de traitement (61, 62, 63, 64, 65), cependant que l'équipement de répartition (85) retransmet à deux interfaces de données (85d, 85e) le paquet de données de capteur reçu, cependant que l'équipement de répartition (85) reproduit le paquet de données de capteur en fonction du nombre des interfaces de données (85d, 85e).

2. Procédé selon la revendication 1, **caractérisé en ce que** les paquets de données de capteur sont transportés en fonction du standard PCIe ou du standard Rapid-IO.

3. Procédé selon la revendication 1 ou 2, **caractérisé en ce qu'**au moins une unité de couplage (36a, 36b, 36c) est mise à disposition, cependant que la au moins une unité de couplage (36a, 36b, 36c) reçoit des données de capteur et crée le paquet de données de capteur pour l'envoi à l'équipement de répartition (85), cependant que la au moins une unité de couplage (36a, 36b, 36c) détermine de préférence l'adresse de destination pour le paquet de données de capteur et l'affecte au paquet de données de capteur.

4. Procédé selon une des revendications précédentes, **caractérisé en ce que** l'équipement de répartition (85) détermine les paramètres de transfert au moyen d'un tableau de transfert.

5. Procédé selon une des revendications précédentes, **caractérisé en ce qu'**au moins une des au moins une unité de traitement (61, 62, 63, 64, 65) est conçue pour l'envoi de résultats de traitement à l'équipement de répartition (85) sous forme de paquet der résultats de traitement, cependant que le paquet de résultats de traitement comprend une adresse de destination et que l'équipement de répartition (85) délivre le paquet de données de capteur en fonction de l'adresse de destination à une interface de données (85d, 85e).

6. Procédé selon une des revendications précédentes, **caractérisé en ce qu'**une unité de commande (86) configure le capteur (31, 32, 33, 34, 35), l'équipement de répartition (85) et/ou la au moins une unité de traitement (61, 62, 63, 64, 65).

7. Procédé selon la revendication 6, **caractérisé en ce que** l'unité de commande (86) prédétermine l'adresse de destination pour l'envoi de données de la au moins une unité de traitement (61, 62, 63, 64, 65), cependant que, de préférence, l'unité de commande (86) envoie par l'intermédiaire de l'équipement de répartition (85) l'adresse de destination à utiliser.

8. Procédé selon la revendication 6 ou 7 et la revendication 3, **caractérisé en ce que** l'unité de commande (86), pour chaque billet de banque, de préférence suivant un ordre, en particulier d'un N-ième billet de banque et/ou d'une position, prédétermine à l'unité de couplage (36a, 36b, 36c) et/ ou à l'unité de traitement (61, 62, 63, 64, 65) une adresse déterminée de destination pour l'envoi de données.

9. Procédé selon une des revendications de 6 à 8, **caractérisé en ce que** l'unité de commande (86) envoie à l'équipement de répartition (85) des paramètres de transfert, définit ainsi à l'équipement de répartition (85) des paramètres de transfert et affecte à l'adresse de destination une interface de données (85a, 85b, 85c) de l'équipement de répartition (85).

10. Système de répartition de données de capteur dans un dispositif de traitement de documents de valeur (1), **caractérisé par**
a. un équipement de répartition (85) ayant au moins deux interfaces de données (85a, 85b, 85c), cependant que l'équipement de répartition (85) est conçu pour recevoir un paquet de données de capteur, pour déterminer relativement au paquet de données de capteur, en fonction d'une adresse de destination contenue dans le paquet de données de capteur, des paramètres de transfert, et pour, en fonction de l'adresse de destination et de paramètres de transfert, délivrer le paquet de données de capteur à une interface de données ; et
b. une unité de traitement (61, 62, 63, 64, 65), cependant que l'unité de traitement (61, 62, 63, 64, 65) comprend une unité de calcul et une mémoire (61a, 62a), que la mémoire (61a, 62a) comporte une adresse mémoire physique décrite par l'adresse de destination et que l'unité de traitement (61, 62, 63, 64, 65) est reliée à l'interface de données à laquelle le paquet de données de capteur est délivré, cependant que
l'équipement de répartition (85) est relié, au moyen d'au moins deux interfaces de données (85a, 85b, 85c), à aux moins deux unités de traitement (61, 62, 63, 64, 65), cependant que l'équipement de répartition (85) retransmet à deux interfaces de données (85d, 85e) le paquet de données de capteur reçu, cependant que l'équipement de répartition (85) reproduit le paquet de données de capteur en fonction du nombre des interfaces de données (85d, 85e).

11. Système selon la revendication 10, comprenant en outre une unité de couplage, cependant que l'unité de couplage (36a, 36b, 36c) est conçue pour créer le paquet de données de capteur et est reliée à l'équipement de répartition (85), cependant que, de préférence, l'unité de couplage (36a, 36b, 36c) formate des données de capteur suivant un protocole prédéterminé de manière à constituer un paquet de données de capteur et affecte au paquet de données de capteur l'adresse de destination.

12. Système selon la revendication 11, **caractérisé en ce que** l'unité de couplage est reliée à au moins un capteur (31, 32, 33, 34, 35).

13. Système selon une des revendications de 10 à 12, **caractérisé en ce que** l'équipement de répartition comporte un tableau de transfert ayant des paramètres de transfert.

14. Système selon une des revendications de 10 à 13, comprenant en outre une unité de commande (86), cependant que l'unité de commande (86) est conçue pour configurer l'équipement de répartition (85) et/ou l'unité de traitement (61, 62, 63, 64, 65), de préférence pour ajuster l'adresse de destination de paquets de données de capteur à envoyer, de préférence spécifiquement aux billets de banque, en particulier suivant un ordre, et/ou pour définir les paramètres de transfert pour l'équipement de répartition.

15. Système selon la revendication 14, **caractérisé en ce que** l'unité de commande (86) est conçue en tant que partie et/ou en combinaison avec une des au moins une unité de traitement (61, 62, 63, 64, 65).

16. Système selon la revendication 11 ou 12, **caractérisé en ce que** le système est conçu pour transporter le paquet de données de capteur suivant le standard PCIe ou le standard Rapid-IO, ce pour quoi l'équipement de répartition (85) est conçu sous forme de PCIe-Switch ou Rapid-IO-Switch, et l'unité de couplage (36a, 36b, 36c) et l'unité de traitement (61, 62, 63, 64, 65) comportent des interfaces correspondantes PCIe ou Rapid-IO.

17. Système selon une des revendications de 10 à 16, **caractérisé en ce que** le chaque adresse de destination est affectée à au moins une interface de données (85a, 85b, 85c) de l'équipement de répartition (85).

18. Système selon la revendication 11, 12 ou 16, **caractérisé en ce que** la au moins une unité de couplage (36a, 36b, 36c) comprend une interface de communication selon le standard Camera Link (CL), le standard High-Level-Data Link Control (HDLC) et/ou la spécification Common Detektor Interface (CDI) pour la liaison avec un capteur (31, 32, 33, 34, 35).

19. Système selon la revendication 11, 12, 16 ou 18, **caractérisé en ce que** l'unité de couplage (36a, 36b, 36c) comporte un FPGA, cependant que le FPGA est équipé pour le formatage du paquet de données de capteur.

20. Système selon la revendication 11, 12, 16, 18 ou 19, **caractérisé en ce qu'**au moins une de la au moins une unité de couplage (36a, 36b, 36c) comprend deux interfaces de capteur pour la liaison respective avec un capteur (31, 32, 33, 34, 35), cependant que l'unité de couplage (36a, 36b, 36c) est conçue pour recevoir des données de capteur par l'intermédiaire de chacune des interfaces de communication et pour respectivement créer des paquets de données de capteur à partir des données de capteur, cependant que, à chaque paquet de données de capteur, une adresse de destination est affectée, et, de préférence, chaque paquet de données de capteur est envoyé par l'intermédiaire d'une interface de communication à l'équipement de répartition (85).

21. Système selon une des revendications de 10 à 20, **caractérisé en ce que** le système est conçu pour l'exécution d'un procédé selon une des revendications de 1 à 9.
